(19) Europäisches Patentamt
European Patent Office
Office européen des brevets

(11) EP 4 252 548 A1

(12) EUROPEAN PATENT APPLICATION
published in accordance with Art. 153(4) EPC

(43) Date of publication:
**04.10.2023 Bulletin 2023/40**

(21) Application number: **21898205.6**

(22) Date of filing: **30.11.2021**

(51) International Patent Classification (IPC):
***A23L 13/00*** *(2016.01)* ***B01J 13/18*** *(2006.01)*
***A23L 5/00*** *(2016.01)*

(52) Cooperative Patent Classification (CPC):
**A23L 5/00; A23L 13/00; B01J 13/18**

(86) International application number:
**PCT/JP2021/043969**

(87) International publication number:
**WO 2022/114234 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2020 JP 2020199129**

(71) Applicant: **FUJIFILM Corporation**
**Tokyo 106-8620 (JP)**

(72) Inventor: **MATSUNO, Ryo**
**Ashigarakami-gun, Kanagawa 258-8577 (JP)**

(74) Representative: **HGF**
**HGF Limited**
**1 City Walk**
**Leeds LS11 9DX (GB)**

# (54) EDIBLE OIL-CONTAINING MICROCAPSULE, MICROCAPSULE DISPERSION, PRODUCTION METHOD FOR EDIBLE OIL-CONTAINING MICROCAPSULE, AND MEAT ALTERNATIVE

(57) Provide is edible oil-encapsulating microcapsules having a core portion containing edible oil or fat having a melting point of 30°C or less, and a shell portion encapsulating the core portion and containing an edible and ionically cross-linkable polymer that is cross-linked with a polyvalent cation in which an average particle diameter is 10 µm or more and 300 µm or less, and a coefficient of variation of the number average particle diameter is 30% or less, a dispersion liquid of the edible oil-encapsulating microcapsules, a manufacturing method of the edible oil-encapsulating microcapsules, and meat substitute.

EP 4 252 548 A1

## Description

## BACKGROUND OF THE INVENTION

1. Field of the Invention

The present disclosure relates to edible oil-encapsulating microcapsules, a microcapsule dispersion liquid, a manufacturing method of edible oil-encapsulating microcapsules, and a meat substitute.

2. Description of the Related Art

In recent years, a "meat substitute" made from plant proteins, which is derived from soybeans or the like, has been attracting attention mainly in Europe and America due to concerns about food crisis in the future, as well as alienation from eating meat from the viewpoints of health consciousness, environmental conservation, animal protection, and the like. With the widespread use of the meat substitute, it is required that the meat substitute has a taste, mouthfeel, and the like similar to those of meat, and edible capsules, a method for improving the taste, mouthfeel, and the like of meat, and the like are being studied.

For example, JP2014-513966A discloses edible capsules including a core surrounded by an encapsulating skin in which the core is liquid at 25°C and contains an aqueous mixture of one or more carrageenans, one or more flavorants, and one or more edible oils that in total constitute at least 0.5 wt% and at most 30 wt% of the core, and the encapsulating skin contains an alginate crosslinked with one or more polyvalent cations, and the capsules are nonspherical and seamless.

Further, JP1987-146584A (JP-S62-146584A) discloses a manufacturing method of a marbled meat characterized by dispersing microcapsules with oils or fats or seasoned oils or fats in water or a liquid in which proteins, polysaccharides, plant fibers, and the like are appropriately dispersed in water, and injecting or inserting the dispersion liquid into meat at a low temperature.

## SUMMARY OF THE INVENTION

Although a method for improving the taste and mouthfeel of meat are described in any of JP2014-513966A and JP1987-146584A (JP-S62-146584A) described above, there is no description or suggestion of a technique for improving the texture and taste of meat substitute.

In view of the above, an object to be solved by the first embodiment is to provide edible oil-encapsulating microcapsules in which granular feeling in a case of being contained in a food material is reduced.

In addition, the object is to provide a manufacturing method of edible oil-encapsulating microcapsules in which granular feeling in a case of being contained in a food material is reduced.

In addition, the object is to provide a microcapsule dispersion liquid in which granular feeling in a case of being contained in a food material is reduced.

In addition, the object is to provide a meat substitute having reduced granular feeling.

Specific means for solving the above objects include the following aspects.

<1> Edible oil-encapsulating microcapsules having

a core portion containing edible oil or fat having a melting point of 30°C or less, and
a shell portion encapsulating the core portion and containing an edible and ionically cross-linkable polymer that is cross-linked with a polyvalent cation,
in which a number average particle diameter is 10 μm or more and 300 μm or less, and
a coefficient of variation of the number average particle diameter is 30% or less.

<2> Edible oil-encapsulating microcapsules having

a core portion containing edible oil or fat having a melting point of 30°C or less, and
a shell portion encapsulating the core portion and containing an edible and ionically cross-linkable polymer that is cross-linked with a polyvalent cation,
wherein a number average particle diameter is 10 μm or more and 300 μm or less, and
at least one of the core portion or the shell portion contains a metal chelating agent.

<3> The edible oil-encapsulating microcapsules according to <1>,

in which at least one of the core portion or the shell portion contains a metal chelating agent.
<4> The edible oil-encapsulating microcapsules according to <2> or <3>,
in which a content of the metal chelating agent is 0.1 ppm to 500 ppm with respect to a total mass of the edible oil-encapsulating microcapsules.
<5> The edible oil-encapsulating microcapsules according to any one of <1> to <4>,
in which a content of the edible oil or fat having a melting point of 30°C or less is 50% by mass or more with respect to a total mass of all edible oil or fat contained in the core portion.
<6> The edible oil-encapsulating microcapsules according to any one of <1> to <5>,
in which the ionically cross-linkable polymer is an alginate.
<7> The edible oil-encapsulating microcapsules according to any one of <1> to <6>,
in which the edible oil or fat having a melting point of 30°C or less contains at least one compound selected from the group consisting of oleic acid, linoleic acid, and $\alpha$-linolenic acid.
<8> The edible oil-encapsulating microcapsules according to any one of <1> to <7>, in which the edible oil or fat contained in the core portion further contains water.
<9> The edible oil-encapsulating microcapsules according to any one of <1> to <8>, in which a thickness of the shell portion is 1 $\mu$m to 100 $\mu$m.
<10> The edible oil-encapsulating microcapsules according to any one of <1> to <9>,
in which the edible oil or fat in the core portion is one oil droplet, and a coefficient of variation of a number average liquid droplet diameter of the oil droplet is 20% or less.
<11> Edible oil-encapsulating microcapsules having

a core portion containing edible oil or fat having a melting point of 30°C or less, and
a shell portion encapsulating the core portion and containing an edible and ionically cross-linkable polymer that is cross-linked with a polyvalent cation,
in which a number average particle diameter is 10 $\mu$m or more and 300 $\mu$m or less, and
in manufacturing of the edible oil-encapsulating microcapsules, the microcapsules are subjected to a step of heating at a temperature of 70°C or more for 1 minute or more after forming the microcapsules.

<12> A microcapsule dispersion liquid,
in which the edible oil-encapsulating microcapsules according to any one of <1> to <11> are dispersed in edible oil or fat or water.
<13> A manufacturing method of the edible oil-encapsulating microcapsules according to any one of <1> to <11>, the manufacturing method including

a step A of obtaining an oil-in-water droplet dispersion liquid using a water phase containing an edible and ionically cross-linkable polymer and a chelate compound of a polyvalent cation, and an oil phase containing edible oil or fat having a melting point of 30°C or less,
a step B of mixing the oil-in-water droplet dispersion liquid obtained in the step A and edible oil or fat to obtain an oil-in-water-in-oil droplet dispersion liquid in which oil-in-water droplets are dispersed in the edible oil or fat, and
a step C of obtaining a mixed solution of the oil-in-water-in-oil droplet dispersion liquid obtained in the step B and edible oil or fat containing a pH lowering agent.

<14> The manufacturing method of edible oil-encapsulating microcapsules according to <13>,
in which at least the step B and the step C are performed within a microchannel, and the oil-in-water-in-oil droplet dispersion liquid and the edible oil or fat containing a pH lowering agent are mixed within the microchannel.
<15> The manufacturing method of edible oil-encapsulating microcapsules according to <13> or <14>,
in which a pH of a water phase in the mixed solution obtained in the step C is 6.9 or less.
<16> The manufacturing method of edible oil-encapsulating microcapsules according to any one of <13> to <15>, the manufacturing method further including
a step of separating the edible oil-encapsulating microcapsules after the step C.
<17> The manufacturing method of edible oil-encapsulating microcapsules according to <16>, the manufacturing method further including
a step of heating the edible oil-encapsulating microcapsules at a temperature of 70°C or more for 1 minute or more.
<18> A meat substitute comprising the edible oil-encapsulating microcapsules according to any one of <1> to <11>.
<19> The meat substitute according to <18>,
in which a content of the edible oil-encapsulating microcapsules is 1% by mass to 30% by mass with respect to a total mass of the meat substitute.

According to the first embodiment, there is provided edible oil-encapsulating microcapsules in which granular feeling in a case of being contained in a food material is reduced.

In addition, there is provided a manufacturing method of edible oil-encapsulating microcapsules in which granular feeling in a case of being contained in a food material is reduced.

In addition, there is provided a dispersion liquid of edible oil-encapsulating microcapsules in which granular feeling in a case of being contained in a food material is reduced.

In addition, there is provided a meat substitute having reduced granular feeling.

## BRIEF DESCRIPTION OF THE DRAWINGS

Fig. 1 is a schematic perspective view of an example of a microchannel device used in the manufacturing method of edible oil-encapsulating microcapsules according to the present disclosure.
Fig. 2 is a schematic cross-sectional view taken along a line II-II illustrated in Fig. 1.
Fig. 3 is a schematic exploded perspective view of the microchannel device illustrated in Fig. 1.
Fig. 4 is a schematic plan view of the microchannel device illustrated in Fig. 1.
Fig. 5 is a schematic plan view showing an example of a channel of a microchannel device used in the manufacturing method of edible oil-encapsulating microcapsules according to the present disclosure.
Fig. 6 is a schematic plan view showing an example of a channel of a microchannel device used in the manufacturing method of edible oil-encapsulating microcapsules according to the present disclosure.
Fig. 7 is a schematic plan view showing an example of a channel of a microchannel device used in the manufacturing method of edible oil-encapsulating microcapsules according to the present disclosure.
Fig. 8 is a schematic plan view showing an example of a channel of a microchannel device used in the manufacturing method of edible oil-encapsulating microcapsules according to the present disclosure.
Fig. 9 is a schematic plan view showing an example of a channel of a microchannel device used in the manufacturing method of edible oil-encapsulating microcapsules according to the present disclosure.
Fig. 10 is a schematic plan view showing an example of a channel of a microchannel device used in the manufacturing method of edible oil-encapsulating microcapsules according to the present disclosure.

## DESCRIPTION OF THE PREFERRED EMBODIMENTS

Hereinafter, the contents according to the present disclosure will be described in detail. The description of the constitutional requirements described below is based on the representative embodiments according to the present disclosure; however, the present disclosure is not limited to such embodiments.

In the present disclosure, a numerical range indicated using "to" means a range including numerical values described before and after "to" as a minimum value and a maximum value, respectively. Regarding numerical ranges that are described stepwise in the present disclosure, an upper limit value or a lower limit value described in a numerical range may be replaced with an upper limit value or a lower limit value of another stepwise numerical range. In addition, in the numerical ranges described in the present disclosure, an upper limit value and a lower limit value disclosed in a certain range of numerical values may be replaced with values shown in Examples.

In the present disclosure, a combination of two or more preferred aspects is a more preferred aspect.

In the present disclosure, in a case where a plurality of substances corresponding to components are present in the composition, the amount of each component in the composition means a total amount of the plurality of substances present in the composition, unless otherwise noted.

In the present disclosure, the term "step" includes not only an independent step but also a step that cannot be clearly distinguished from other steps, as long as the intended purpose of the step is achieved.

In the present disclosure, unless otherwise specified, plant-based meat is an example of meat substitute.

(Edible oil-encapsulating microcapsules)

The edible oil-encapsulating microcapsules according to the first embodiment have a core portion containing edible oil or fat having a melting point of 30°C or less, and a shell portion encapsulating the above-described core portion and containing an edible and ionically cross-linkable polymer that is cross-linked with a polyvalent cation, in which an average particle diameter is 10 $\mu$m or more and 300 $\mu$m or less, and a coefficient of variation of the number average particle diameter is 30% or less.

In the existing meat substitute, the fat contained in the livestock meat (so-called meat) cannot be simulated, and the existing meat substitute tends to be inferior in texture, taste, and the like as compared with the meat. The present inventor has found that, by forming microcapsules simulating fat cells that contribute to particularly deliciousness and incorporating the microcapsules into a meat substitute, the meat substitute having a quality close to that of meat can be obtained.

As a result of diligent studies by the present inventor, it has been found that by adopting the above-described configuration, it is possible to provide edible oil-encapsulating microcapsules in which granular feeling in a case of being contained in a food material is reduced.

The detailed mechanism that brings about the aforementioned effect is unclear, but is assumed to be as below.

The edible oil-encapsulating microcapsules according to the first embodiment contains edible oil having a melting point of 30°C or less in the core portion, and contains an edible and ionically cross-linkable polymer in which the shell portion is cross-linked with a polyvalent cation. Since the number average particle diameter of the edible oil-encapsulating microcapsules is 10 μm to 300 μm, the size of the microcapsules is approximated to a general fat cell size of 50 μm to 100 μm, and since the coefficient of variation of the number average particle diameter is 30% or less, the number average particle diameter is relatively uniform. Therefore, it is presumed that even in a case where the edible oil-encapsulating microcapsules according to the first embodiment is included in the food material, a granular feeling is unlikely to remain in the food material, a feeling of remaining in the oral cavity when the food material is eaten is reduced, and the texture is good (that is, the granular feeling is excellently reduced in a case where the microcapsules is contained in the food material (hereinafter, it is also simply referred to as "excellent in reduction of the granular feeling").

In addition, it is presumed that since the edible oil-encapsulating microcapsules according to the first embodiment have the coefficient of variation of the number average particle diameter of 30% or less, the number average particle diameter of the edible oil-encapsulating microcapsules and the thickness of the shell portion of the edible oil-encapsulating microcapsules is also uniform, that is, the control of the thickness of the shell portion (hereinafter, also referred to as "outer skin thickness controllability") is excellent. Therefore, it is possible to suppress elution of edible oils or fats in the edible oil-encapsulating microcapsules during storage or cooking, and to allow the edible oils or fats in the edible oil-encapsulating microcapsules to flow out when the food material is eaten.

It is presumed that since the edible oil-encapsulating microcapsules according to the first embodiment have the coefficient of variation of the number average particle diameter of 30% or less, the number of microcapsules having a particle diameter smaller than the number average particle diameter is substantially reduced, and thus the encapsulation amount of edible oil or fat that can be contained in the same microcapsule volume as that of the polydispersed microcapsule having a coefficient of variation of the number average particle diameter of 30% or more is large, as a result, the upper limit amount of the outflow amount of edible oil or fat when the food material is eaten is also large.

Each configuration of the edible oil-enclosed microcapsules according to the first embodiment will be described below.

<Core portion>

The core portion of the edible oil-encapsulating microcapsules according to the first embodiment includes edible oil or fat having a melting point of 30°C or less (hereinafter, may be simply referred to as "edible oil or fat").

« Edible oil or fat »

In the present specification, the edible oil or fat includes the meanings of both a fatty acid used in foods and an ester compound of the fatty acid. Examples of the ester compound of the fatty acid include sucrose fatty acid ester (SAIB) and glycerin fatty acid ester.

In addition, in the present specification, the edible oil or fat having a melting point of 30°C or less includes an oil or fat having a function as a surfactant. Examples of oil or fat having a function as a surfactant include nonionic surfactants mentioned later.

In addition, the edible oil or fat having a melting point of 30°C or less may be an oil or fat having a melting point adjusted to 30°C or less by subjecting the edible oil or fat having a melting point of more than 30°C to, for example, hydrogenation or ester exchange.

In the first embodiment, the melting point means a melting point under 1 atmospheric pressure, and is obtained by the following method.

The melting point of edible oils or fats is determined by the slip melting point method, and according to the Japan Agricultural Standard (JAS standard), the procedure is as follows.

One end of a capillary tube (an inner diameter of 1 mm, an outer diameter of 2 mm or less, a length of 50 mm to 80 mm, and both ends opened) is immersed in a melted sample (edible oil or fat) to fill the capillary tube with the sample at a height of about 10 mm. The capillary tube filled with the sample was left at 10°C or less for 24 hours or on ice for 1 hour, and then the capillary tube filled with the sample are brought into close contact with the lower part of the thermometer (1/5°C scale, a length of 385 mm to 390 mm, a mercury bulb length of 15 mm to 25 mm) by using a rubber ring or an appropriate method, and the lower ends of the thermometer and the capillary tube filled with the sample are aligned. This thermometer is immersed in a beaker having an appropriate size (a capacity of about 600 mL) and filled with distilled water, and the lower end of the thermometer is placed at a depth of about 30 mm below the water surface. While stirring the water in this beaker by an appropriate method, the sample is heated to increase by 2°C per minute at first and by 0.5°C per minute after reaching a temperature 10°C below the melting point, and the temperature at which the sample begins to rise in the capillary tube is defined as the slip melting point (that is, the melting point).

The edible oil or fat is not particularly limited and may be either natural oils or synthetic oils, or may be a mixture thereof. The natural oils or fats may be animal oils or fats or plant oils or fats, but is preferably plant oils or fats from the viewpoint of reducing the risk of lifestyle-related diseases and from the viewpoint of social issues such as greenhouse gas emissions from livestock farming.

From the viewpoint of simulating fat cells, the edible oil or fat is preferably a saturated fatty acid or an unsaturated fatty acid, more preferably a saturated fatty acid having 12 to 30 carbon atoms or an unsaturated fatty acid having 12 to 30 carbon atoms, and still more preferably an unsaturated fatty acid having 16 to 24 carbon atoms.

From the viewpoint of reducing the risk of lifestyle-related diseases, the number of unsaturated double bonds of the unsaturated fatty acid is preferably 1 to 3 and more preferably 2 or 3 in one molecule.

Examples of the unsaturated fatty acid having a melting point of 30°C or less include triglycerides of medium-chain fatty acids having 6 to 12 carbon atoms (medium-chain fatty acid triglycerides) such as caproic acid, caprylic acid, capric acid, and lauric acid; plant oils or fats such as coconut oil, sesame oil, olive oil, corn oil, rapeseed oil, safflower oil, soybean oil, sunflower oil, nut oil, grape seed oil, and linseed oil, and vitamin E.

Among these, from the viewpoint of reducing the risk of lifestyle-related diseases, the edible oil or fat having a melting point of 30°C or less preferably includes at least one compound selected from the group consisting of sesame oil, olive oil, corn oil, rapeseed oil, safflower oil, soybean oil, and sunflower oil, more preferably includes at least one plant oil or fat selected from the group consisting of corn oil, rapeseed oil, safflower oil, and sunflower oil, still more preferably includes at least one compound selected from the group consisting of oleic acid, linoleic acid, and $\alpha$-linolenic acid, and particularly preferably includes oleic acid.

In addition, the corn oil is a mixed fatty acid containing at least linoleic acid, oleic acid, and palmitic acid, and the sunflower oil is a mixed fatty acid containing at least linoleic acid and oleic acid.

As the edible oil or fat having a melting point of 30°C or less, one kind of the edible oil or fat may be used singly, or two or more kinds thereof may be used concurrently.

[Content]

From the viewpoint of reducing the risk of lifestyle-related diseases, the content of edible oils or fats having a melting point of 30°C or less is preferably 50% by mass or more, preferably 70% by mass or more, still more preferably 80% by mass or more, particularly preferably 90% by mass or more, and extremely preferably 95% by mass or more with respect to the total mass of all edible oils or fats contained in the core portion. The upper limit value is not particularly limited, but is preferably 100% by mass or less.

The core portion may include edible oils or fats other than the edible oils or fats having a melting point of 30°C or less (hereinafter, also referred to as "other edible oils or fats").

Examples of other edible oils or fats include plant oils or fats having a melting point of more than 30°C.

In a case where the core portion contains other edible oils or fats, the content of the other edible oils or fats is preferably 10% by mass or less, more preferably 5% by mass or less, and still more preferably 1% by mass or less with respect to the total mass of the edible oils or fats contained in the core portion, and the core portion contains particularly preferably no other oils or fats. The lower limit value is not particularly limited, but is preferably 0% by mass or more.

In addition, the core portion may include, as necessary, components other than the edible oil or fat having a melting point of 30°C or less and other edible oils or fats (hereinafter, "other components").

Examples of other components include stabilizers, excipients, and fragrances.

In order to improve the texture and taste of the meat substitute (plant-based meat), adequate moisture, an umami component (amino acids such as inosinic acid and glutamic acid), and the like are required, and it is presumed that the outflow of moisture, umami components, and the like during cooking can be suppressed by incorporating these into the core portion of the microcapsule. From such a viewpoint, it is preferable that the edible oil or fat contained in the core portion further contains water. Examples of the water include distilled water, ion-exchanged water, deionized water, ultra-filtered water, pure water, and pure water is suitably used.

The edible oil or fat contained in the core portion described above may contain components other than water, as necessary. Examples of the components other than water include surfactants for improving the formability of the oil droplet and the stability of the formed oil droplet, which will be described later, excipients, stabilizers, and amino acids (for example, inosinic acid glutamic acid which is an umami component), and nucleic acids.

The presence or absence of water in the edible oil or fat can be confirmed by using a transmission optical microscope.

<Retention form of oil or fat in core portion>

The retention form of the edible oil or fat in the core portion is not particularly limited as long as the edible oil or fat is included in the core portion, and it may be state where a plurality of oil droplets of the edible oil or fat are retained in the core portion, or a state where one oil droplet thereof is retained.
From the viewpoint of excellent reduction in granular feeling, it is preferable that the edible oil or fat in the core portion is one oil droplet, and more preferable that the edible oil or fat in the core portion is one oil droplet, and the coefficient of variation of the number average liquid droplet diameter of the oil droplet is 20% or less.
A calculation method of the coefficient of variation of the number average liquid droplet diameter of the oil droplets will be described in the section of Examples described later.
The retention form of the edible oil or fat in the core portion can be confirmed by a transmission optical microscope.
The shape of the core portion is not particularly limited. Examples of the shape of the core portion in a plan view include a circular shape and an elliptical shape, and from the viewpoint of controllability of the outer skin thickness, a circular shape is preferable.
The shape of the core portion can be confirmed by a transmission optical microscope.
The number average particle diameter of the edible oil or fat contained in the core portion (hereinafter, may also be referred to as "number average particle diameter of an encapsulated oil") is, from the viewpoint of excellent reduction in granular feeling, preferably 10 μm or more and 200 μm or less, more preferably 20 μm or more and 150 μm or less, still more preferably 50 μm or more and 100 μm or less, and particularly preferably 60 μm or more and 90 μm or less.
In addition, the coefficient of variation of the number average particle diameter of the encapsulated oil is, from the viewpoint of excellent reduction in granular feeling, preferably 50% or less, more preferably 20% or less, and still more preferably 10% or less.
A calculation method of the number average particle diameter and the coefficient of variation of the encapsulated oil will be described in the section of Examples described later.

<Shell portion>

The shell portion of the edible oil-encapsulating microcapsule according to the first embodiment encapsulates a core portion and contains an edible and ionically cross-linkable polymer that is cross-linked with polyvalent cations.

«Ionically cross-linkable polymer»

As the edible and ionically cross-linkable polymer that is cross-linked with polyvalent cations (hereinafter, also simply referred to as "ionically cross-linkable polymer"), an ionically cross-linkable polymer capable of cross-linking with known polyvalent cations can be used.
The ionically cross-linkable polymer is not particularly limited as long as it can be used in foods, and examples thereof include pectin or a derivative thereof, alginic acid or a salt thereof, gellan gum, carrageenan, polygalacturonic acid, and a mixture thereof.
Among these, the ionically cross-linkable polymer is, from the viewpoint of excellent reduction in granular feeling, preferably at least one compound selected from the group consisting of alginates (calcium alginate, magnesium alginate), carrageenans, polygalacturonic acids, and pectins, more preferably at least one compound selected from the group consisting of alginates and carrageenans, and still more preferably alginates.
Examples of the alginates include salts of alginic acid with magnesium, an alkali metal, or an alkaline earth metal.
Among the alginates, from the viewpoint of excellent reduction in granular feeling, calcium alginate, magnesium alginate, and sodium alginate are preferable, and sodium alginate is more preferable. In addition, the carrageenan is preferably x-carrageenan and ι-carrageenan.
One kind of the ionically cross-linkable polymer may be used singly or two or more kinds thereof may be used concurrently.
From the viewpoint of productivity, in a case where 1 g of the ionically cross-linkable polymer is dissolved in 100 mL of water (1 w/vol%), a viscosity range of the ionically cross-linkable polymer at 25°C is preferably 10 Cp (0.01 Pa·s) to 10,000 Cp (10 Pa·s), more preferably 10 Cp (0.01 Pa·s) to 1,000 Cp (1 Pa·s), and still more preferably 10 Cp (0.01 Pa·s) to 500 Cp (0.5 Pa·s).
The value of the viscosity of the liquid in which the ionically cross-linkable polymer is dissolved is obtained by the method described in JISZ 8803 "methods for viscosity measurement of liquid (2011)".

From the viewpoint of excellent reduction in granular feeling, the content of the ionically cross-linkable polymer is preferably 50% by mass to 90% by mass, and more preferably 60% by mass to 90% by mass with respect to the total solid content of the components constituting the shell portion.
In the present disclosure, the total solid content indicates the total amount of components excluding volatile components such as a solvent.

[Polyvalent cation]

The polyvalent cation used for cross-linking the ionically cross-linkable polymer is not particularly limited.
From the viewpoint of excellent reduction in granular feeling, the polyvalent cation is preferably a divalent or trivalent cation, and more preferably a divalent metal cation.
Examples of the divalent metal cation include calcium ion, barium ion, iron ion, zinc ion, and copper ion.
From the viewpoint of excellent cross-linking with an ionically cross-linkable polymer, among these, calcium ion is preferable as the divalent metal cation.
The above-described polyvalent cation may be used as a salt of the polyvalent cation or a compound in which the polyvalent cation is coordinated with a metal chelating agent (hereinafter, also referred to as "metal chelate compound").

-Other components-

The shell portion may contain components other than the ionically cross-linkable polymer (hereinafter, may be referred to as "other components of a shell portion") as long as the effects of the first embodiment are not impaired.
Examples of other components of the shell portion include a thickener of a polysaccharide other than carrageenan and pectin, such as gellan gum, and a plasticizer for imparting flexibility in a dry state.
Examples of the plasticizer include glycerin and sorbitol.
As the other components of the shell portion, one kind of the other component may be used singly or two or more kinds thereof may be used concurrently.

[Thickness of shell portion]

From the viewpoint of excellent reduction in granular feeling, the thickness of the shell portion is preferably 1 μm to 100 μm, more preferably 2.5 μm to 90 μm, and still more preferably 5 μm to 85 μm.
The thickness of the shell portion is obtained by swelling the edible oil-encapsulating microcapsules with a solvent (preferably pure water) and then observing with a transmission optical microscope.

<< Number average particle diameter >>

The number average particle diameter of the edible oil-encapsulating microcapsules according to the first embodiment is 10 μm or more and 300 μm or less. From the viewpoint of excellent reduction in granular feeling, the number average particle diameter is preferably 20 μm or more and 300 μm or less, more preferably 30 μm or more and 280 μm or less, and still more preferably 50 μm or more and 250 μm or less.
In the first embodiment, the number average particle diameter of the edible oil-encapsulating microcapsules is obtained from an image photograph obtained by observing the edible oil-encapsulating microcapsules with a transmission optical microscope.
A method for obtaining the number average particle diameter of the edible oil-encapsulating microcapsules will be specifically described. The edible oil-encapsulating microcapsules are imaged by using a transmission optical microscope (manufactured by Carl Zeiss AG, product name: inverted microscope Axio Observer. Z1) with a 5× magnification objective. The equivalent circle diameters of the edible oil-encapsulating microcapsules is obtained from 200 or more imaged edible oil-encapsulating microcapsule images by ImageJ, and the number average particle diameter can be obtained from the arithmetic mean value (number average) of the obtained equivalent circle diameters.

«Coefficient of variation»

The coefficient of variation of the number average particle diameter of the edible oil-encapsulating microcapsules according to the first embodiment is 30% or less. In a case where the coefficient of variation of the number average particle diameter is 30% or less, the edible oil-encapsulating microcapsules are excellent in suppressing the outer skin thickness and have a reduced granular feeling. From the viewpoint of excellent suppression of granular feeling and excellent outer skin thickness controllability, the coefficient of variation of the number average particle diameter is preferably 20% or less, more preferably 15% or less, still more preferably 10% or less, and particularly preferably 8% or less.

The lower limit value is not particularly limited, but is preferably 0% by mass or more.

The coefficient of variation is calculated by the following expression using the number average particle diameter of the edible oil-encapsulating microcapsules.

$$\text{Coefficient of variation (\%)} = \frac{\text{Standard deviation of number average particle diameter}}{\text{Number average particle diameter}} \times 100$$

The edible oil-encapsulating microcapsules according to the first embodiment may contain a metal chelating agent in at least one of the core portion or the shell portion.

As the metal chelating agent, a known metal chelating agent can be suitably used.

Examples of the metal chelating agent include oxycarboxylic acids such as tartaric acid, citric acid, and gluconic acid, and aminocarboxylic acids such as iminodiacetic acid (IDA), nitrilotriacetic acid (NTA), and ethylenediaminetetraacetic acid (EDTA). Among these, the metal chelating agent is preferably ethylenediaminetetraacetic acid (EDTA) from the viewpoint of controlling the crosslinking of the ionically cross-linkable polymer described above by reason of a high chelating ability for a wide range of metal ions and a remarkable pH dependence.

The content of the metal chelating agent is not particularly limited, but from the viewpoint of edibility (reducing toxicity when entering the body), is preferably 300 ppm or less, more preferably 200 ppm or less, and still more preferably 100 ppm or less with respect to the total mass of the microcapsules, and the metal chelating agent is preferably not contained. The lower limit value of the content of the metal chelating agent is not particularly limited, but is preferably 0 ppm or more.

One kind of the metal chelating agent may be used alone or two or more kinds may be used concurrently.

The metal chelating agent contained in the edible oil-encapsulating microcapsules according to the first embodiment can be detected by using gas chromatography-mass spectrometry (GC-MS), GC-MS/selected Ion monitoring (SIM) mode, or high-performance liquid chromatography (HPLC).

The calculation of the content of the metal chelating agent using high-performance liquid chromatography (HPLC) can be performed in accordance with, for example, "Standard methods of analysis in food regulation-Food additives, 2003, supervised by Ministry of Health, Labour and Welfare". Here, in a case of calculating the content of EDTA, the procedure of separating the chelate-type EDTA and the free-type EDTA is omitted.

(Second embodiment of edible oil-encapsulating microcapsules)

The edible oil-encapsulating microcapsules according to the second embodiment have a core portion containing edible oil or fat having a melting point of 30°C or less, and a shell portion encapsulating the core portion and containing an edible and ionically cross-linkable polymer that is cross-linked with a polyvalent cation, in which a number average particle diameter is 10 μm or more and 300 μm or less, and at least one of the core portion or the shell portion contains a metal chelating agent.

An object to be solved by the second embodiment is to provide edible oil-encapsulating microcapsules in which the flavor is not easily impaired.

As a result of diligent studies by the present inventor, it has been found that by adopting the above-described configuration, edible oil-encapsulating microcapsules in which the flavor is not easily impaired can be provided.

The detailed mechanism that brings about the aforementioned effect is unclear, but is assumed to be as below.

The edible oil-encapsulating microcapsules according to the second embodiment contain a metal chelating agent in at least one of a core portion or the shell portion. The metal chelating agent can take in metal ions that promote the oxidation of the food material, and thus has an effect of preventing the oxidation of the food material. It is presumed that the above-mentioned effects of the metal chelating agent result in the edible oil-encapsulating microcapsules in which the flavor is not easily impaired.

Here, the edible oil-encapsulating microcapsules according to the second embodiment include an edible and ionically cross-linkable polymer in which a core portion contains edible oil having a melting point of 30°C or less and a shell portion is cross-linked with polyvalent cations. Since the number average particle diameter of the edible oil-encapsulating microcapsules is 10 μm to 300 μm, the size of the microcapsules is approximated to a general fat cell size of 50 μm to 100 μm. Therefore, microcapsules simulating fat cells that contribute to the deliciousness are formed, and are suitable, for example, for incorporation into meat substitute.

<Core portion>

The core portion of the edible oil-encapsulating microcapsules according to the second embodiment includes edible oil or fat having a melting point of 30°C or less.
The edible oil or fat contained in the core portion has the same meaning as the edible oil or fat according to the first embodiment, and the preferred ranges and the contents are also the same.
From the viewpoint of improving the texture and taste of the meat substitute (plant-based meat), it is preferable that the edible oil or fat contained in the core portion further contains water. Examples of the water include distilled water, ion-exchanged water, deionized water, ultra-filtered water, pure water, and pure water is suitably used.
The edible oil or fat contained in the core portion described above may contain components other than water, as necessary. The component other than water has the same meaning as the component other than water according to the first embodiment, and examples thereof include those exemplified as the component other than water according to the first embodiment.
The core portion may contain edible oils or fats other than edible oils or fats having a melting point of 30°C or less (that is, other edible oils or fats).
The other edible oils or fats contained in the core portion have the same meaning as the other edible oils or fats according to the first embodiment, and the preferred ranges and contents are also the same.
The core portion may include, as necessary, components other than the edible oil or fat having a melting point of 30°C or less and other edible oils or fats (that is, other components).
The other component has the same meaning as the other component according to the first embodiment, and examples thereof include those exemplified as the other component according to the first embodiment.

<Retention form of oil or fat in core portion>

The aspect of the retention of the oil or fat of the core portion contained in the edible oil-encapsulating microcapsules according to the second embodiment is preferably the same as the aspect of the retention of the oil or fat of the core portion contained in the oil-encapsulating microcapsules according to the first embodiment.

<Shell portion>

The shell portion of the edible oil-encapsulating microcapsule according to the second embodiment encapsulates a core portion and contains an edible and ionically cross-linkable polymer that is cross-linked with polyvalent cations.

<<Ionically cross-linkable polymer>>

The edible and ionically cross-linkable polymer cross-linked with the polyvalent cation (that is, the ionically cross-linkable polymer) has the same meaning as the ionically cross-linkable polymer according to the first embodiment, and the preferred ranges and contents are also the same.

[Polyvalent cation]

The polyvalent cation used for cross-linking the ionically cross-linkable polymer contained in the shell portion of the edible oil-encapsulating microcapsules according to the second embodiment has the same meaning as the polyvalent cation according to the first embodiment and the preferred ranges are also same.

-Other components-

The shell portion may contain components other than the ionically cross-linkable polymer (that is, other components of the shell portion) as long as the effects of the second embodiment are not impaired.
The other component of the shell portion has the same meaning as the other component of the shell portion according to the first embodiment, and examples thereof include those exemplified as the other component of the shell portion according to the first embodiment.

[Thickness of shell portion]

The thickness of the shell portion of the edible oil-encapsulating microcapsule according to the second embodiment is preferably the same as the thickness of the shell portion of the edible oil-encapsulating microcapsules according to the first embodiment.

The calculation method of the thickness of the shell portion of the edible oil-encapsulating microcapsule according to the second embodiment is the same as the calculation method of the thickness of the shell portion of the edible oil-encapsulating microcapsules according to the first embodiment.

<< Number average particle diameter >>

The number average particle diameter of the edible oil-encapsulating microcapsules according to the second embodiment is 10 μm or more and 300 μm or less.
The preferred ranges of the number average particle diameter of the shell portion of the edible oil-encapsulating microcapsule according to the second embodiment are preferably the same as the preferred ranges of the number average particle diameter of the shell portion of the edible oil-encapsulating microcapsules according to the first embodiment.
The calculation method of the number average particle diameter of the shell portion of the edible oil-encapsulating microcapsule according to the second embodiment is the same as the calculation method of the number average particle diameter of the shell portion of the edible oil-encapsulating microcapsules according to the first embodiment.

<<Coefficient of variation>>

The coefficient of variation of the number average particle diameter of the edible oil-encapsulating microcapsules according to the second embodiment is preferably the same as the coefficient of variation of the number average particle diameter of the edible oil-encapsulating microcapsules according to the first embodiment.
The calculation method of the coefficient of variation of the number average particle diameter of the edible oil-encapsulating microcapsules according to the second embodiment is the same as the calculation method of the coefficient of variation of the number average particle diameter of the edible oil-encapsulating microcapsules according to the first embodiment.

<<Metal chelating agent>>

The edible oil-encapsulating microcapsules according to the second embodiment contains a metal chelating agent in at least one of the core portion or the shell portion.
The metal chelating agent has the same meaning as the metal chelating agent according to the first embodiment, and the preferred ranges are also the same.
The content of the metal chelating agent is preferably 0.1 ppm to 500 ppm, more preferably 1 ppm to 300 ppm, still more preferably 5 ppm to 200 ppm, particularly preferably 10 ppm to 100 ppm, and most preferably 10 ppm to 50 ppm with respect to the total mass of the edible oil-encapsulating microcapsules.
In the food field, an upper limit value of the content of an additive (for example, a metal chelating agent) in foods may be restricted. In addition, in a case where the content of the metal chelating agent is large in the edible oil-encapsulating capsule, the flavor derived from the metal chelating agent may be easily perceived. From the viewpoint of satisfying the requirements of the content regulation system for additives in foods or the viewpoint of suppressing the flavor derived from the metal chelating agent, the content of the metal chelating agent is preferably 500 ppm or less with respect to the total mass of the edible oil-encapsulating microcapsules.
In addition, from the viewpoint of further enhancing the effect of preventing oxidation, it is preferable that metal ions that promote the oxidation of the food material can be efficiently taken. For that purpose, the content of the metal chelating agent in the edible oil-encapsulating microcapsules is preferably a specific amount or more. Therefore, from the viewpoint of further enhancing the effect of preventing oxidation, the content of the metal chelating agent is preferably 0.1 ppm or more with respect to the total mass of the edible oil-encapsulating microcapsules.
One kind of the metal chelating agent may be used alone or two or more kinds may be used concurrently.
The metal chelating agent contained in the edible oil-encapsulating microcapsules according to the second embodiment can be detected by the same method as the detection method of the metal chelating agent contained in the edible oil-encapsulating microcapsules according to the first embodiment.

<Manufacturing method of edible oil-encapsulating microcapsules according to second embodiment>

The manufacturing method of the edible oil-encapsulating microcapsules according to the second embodiment is not particularly limited, but is preferably the same as the manufacturing method of the edible oil-encapsulating microcapsules according to the first embodiment mentioned later.
In the manufacturing method of edible oil-encapsulating microcapsules according to the first embodiment mentioned later, a chelate compound of a polyvalent cation is included in the water phase used in the step A. The chelate compound of the polyvalent cation is a compound in which the polyvalent cation and the metal chelating agent are coordinated. Therefore, in a case where the edible oil-encapsulating microcapsules according to the second embodiment is manufactured by the manufacturing method for the edible oil-encapsulating microcapsules according to the first embodiment mentioned later, the metal chelating agent is likely to be contained in at least one of the core portion or the shell portion of the edible oil-encapsulating microcapsules.

(Third embodiment of edible oil-encapsulating microcapsules)

Edible oil-encapsulating microcapsules according to the third embodiment are edible oil-encapsulating microcapsules that have a core portion containing edible oil or fat having a melting point of 30°C or less, and a shell portion encapsulating the core portion and containing an edible and ionically cross-linkable polymer that is cross-linked with a polyvalent cation, in which a number average particle diameter is 10 μm or more and 300 μm or less, and in manufacturing of the edible oil-encapsulating microcapsules, the microcapsules are subjected to a step of heating at a temperature of 70°C or more for 1 minute or more after forming the microcapsules.

An object to be solved by the third embodiment is to provide edible oil-encapsulating microcapsules having excellent heat resistance.

As a result of diligent studies by the present inventor, it has been found that edible oil-encapsulating microcapsules having excellent heat resistance can be provided by adopting the above-described configuration.

The detailed mechanism that brings about the aforementioned effect is unclear, but is assumed to be as below.

In the manufacture of the edible oil-encapsulating microcapsules, the edible oil-encapsulating microcapsules according to a third embodiment pass through a step of heating edible oil-encapsulating microcapsules at a temperature of 70°C or more for 1 minute or longer after the formation of the microcapsules. By passing through the above-described step, the amount of water contained in the shell portion is reduced, and the hardness of the shell portion is improved. Therefore, for example, even in a case where the edible oil-encapsulating microcapsules are cooked at a high temperature, leakage of the edible oil or fat contained in the core portion is likely to be suppressed. From the above, it is presumed that the edible oil-encapsulating microcapsules according to the third embodiment are edible oil-encapsulating microcapsules having excellent heat resistance.

Here, the edible oil-encapsulating microcapsules according to the third embodiment include an edible and ionically cross-linkable polymer in which a core portion contains edible oil or fat having a melting point of 30°C or less and a shell portion is cross-linked with polyvalent cations. Since the number average particle diameter of the edible oil-encapsulating microcapsules is 10 μm to 300 μm, the size of the microcapsules is approximated to a general fat cell size of 50 μm to 100 μm. Therefore, microcapsules simulating fat cells that contribute to the deliciousness are formed, and are suitable, for example, for incorporation into meat substitute.

<Core portion>

The aspect of the core portion of the edible oil-encapsulating microcapsule according to the third embodiment is preferably the same as the form of the core portion of the edible oil-encapsulating microcapsules according to the first embodiment.

<Retention form of oil or fat in core portion>

The aspect of the retention of the oil or fat of the core portion contained in the edible oil-encapsulating microcapsules according to the third embodiment is preferably the same as the aspect of the retention of the oil or fat of the core portion contained in the edible oil-encapsulating microcapsules according to the first embodiment.

<Shell portion>

The aspect of the shell portion of the edible oil-encapsulating microcapsules according to the third embodiment is preferably the same as the aspect described in above-described <shell portion> in the edible oil-encapsulating microcapsules according to the first embodiment, except that the thickness of the shell portion is as follows.

[Thickness of shell portion]

The thickness of the shell portion of the edible oil-encapsulating microcapsules according to the third embodiment is preferably 0.5 μm to 90 μm, more preferably 1.5 μm to 80 μm, and still more preferably 2.5 μm to 75 μm from the viewpoint of excellent reduction of the granular feeling and excellent heat resistance.

The thickness of the shell portion is obtained by swelling the edible oil-encapsulating microcapsules with a solvent (preferably pure water) and then observing with a transmission optical microscope.

<< Number average particle diameter >>

The number average particle diameter of the edible oil-encapsulating microcapsules according to the third embodiment is 10 μm or more and 300 μm or less. From the viewpoint of excellent reduction in granular feeling, preferred ranges of the number average particle diameter of the edible oil-encapsulating microcapsules according to the third embodiment is preferably the same as the preferred ranges of the number average particle diameter of the edible oil-encapsulating microcapsules according to the first embodiment.

The method for obtaining the number average particle diameter of the edible oil-encapsulating microcapsules according to the third embodiment is the same as the method for obtaining the number average particle diameter of the edible oil-encapsulating microcapsules according to the first embodiment.

<<Coefficient of variation>>

The coefficient of variation of the number average particle diameter of the edible oil-encapsulating microcapsules according to the third embodiment is preferably within a range or preferred ranges of the coefficient of variation of the number average particle diameter of the edible oil-encapsulating microcapsules according to the first embodiment.

The calculation method of the coefficient of variation of the number average particle diameter of the edible oil-encapsulating microcapsules according to the third embodiment is the same as the calculation method of the coefficient of variation of the number average particle diameter of the edible oil-encapsulating microcapsules according to the first embodiment.

<<Metal chelating agent>>

The edible oil-encapsulating microcapsules according to the third embodiment may contain a metal chelating agent in at least one of the core portion or the shell portion.

The metal chelating agent has the same meaning as the metal chelating agent according to the first embodiment, and the preferred ranges and the contents are also the same.

The metal chelating agent contained in the edible oil-encapsulating microcapsules according to the third embodiment can be detected by the same method as the detection method of the metal chelating agent contained in the edible oil-encapsulating microcapsules according to the first embodiment.

<Manufacturing method of edible oil-encapsulating microcapsules according to third embodiment>

The manufacturing method of the edible oil-encapsulating microcapsules according to the third embodiment is the same as the manufacturing method of the edible oil-encapsulating microcapsules according to the first embodiment mentioned later, but the heating step is an essential step.

(Microcapsule dispersion liquid)

The microcapsule dispersion liquid according to the present disclosure is a dispersion liquid in which the edible oil-encapsulating microcapsules according to the first embodiment, the second embodiment, or the third embodiment are dispersed in edible oil or fat or water. The edible oil-encapsulating microcapsules according to the first embodiment, the second embodiment, or the third embodiment may be dispersed in edible oil or fat, or the edible oil-encapsulating microcapsules according to the first embodiment, the second embodiment, or the third embodiment may be dispersed in water.

Suitable examples of the edible oil or fat in the microcapsule dispersion liquid according to the present disclosure include the oil or fat contained in the core portion, and the preferred oil or fat also has the same meaning.

The water used in the microcapsule dispersion liquid has the same meaning as water that can be contained in the edible oil or fat of the core portion mentioned above, and the preferred form thereof is also the same.

The content of the edible oil-encapsulating microcapsules in the microcapsule dispersion liquid according to the present disclosure is preferably 10% by mass to 65% by mass, more preferably 20% by mass to 60% by mass, and still more preferably 30% by mass to 55% by mass with respect to the total mass of the dispersion liquid.

The microcapsule dispersion liquid may contain the above-mentioned other components, as necessary.

(Manufacturing method of microcapsules)

The manufacturing method of edible oil-encapsulating microcapsules according to the first embodiment includes a step A of obtaining an oil-in-water droplet dispersion liquid using a water phase containing an edible and ionically cross-linkable polymer and a chelate compound of a polyvalent cation, and an oil phase containing edible oil or fat having a melting point of 30°C or less, a step B of mixing the oil-in-water droplet dispersion liquid prepared in the step A and edible oil or fat to obtain an oil-in-water-in-oil droplet dispersion liquid in which oil-in-water droplets are dispersed in the edible oil or fat, and a step C of obtaining a mixed solution of the oil-in-water-in-oil droplet dispersion liquid prepared in the step B and edible oil or fat containing a pH lowering agent.

Hereinafter, details of each step will be described.

<Step A>

The step A is a step of obtaining an oil-in-water droplet dispersion liquid using a water phase containing an edible and ionically cross-linkable polymer and a chelate compound of a polyvalent cation, and an oil phase containing edible oil or fat having a melting point of 30°C or less.

<<Water phase>>

The water phase used in the step A includes an edible and ionically cross-linkable polymer and a chelate compound of a polyvalent cation.

The water phase may further contain components other than the edible and ionically cross-linkable polymer and the chelate compound of the polyvalent cation, as necessary.

[Preparation of ionically cross-linkable polymer]

The ionically cross-linkable polymer contained in the water phase has the same meaning as the ionically cross-linkable polymer mentioned above, and the preferred ranges are also the same.

From the viewpoint of handling in manufacture, the edible and ionically cross-linkable polymer is preferably used as an ionically cross-linkable polymer mixed solution in which a raw material of the ionically cross-linkable polymer is mixed with a solvent.

Examples of the solvent include water, an alcohol compound, but water is preferable.

The content of the raw material of the ionically cross-linkable polymer in the ionically cross-linkable polymer mixed solution is preferably 0.1% by mass to 10% by mass, and more preferably 0.3% by mass to 5% by mass with respect to the total mass of the ionically cross-linkable polymer mixed solution.

[Preparation of metal chelate compound]

In the present specification, a chelate compound of a polyvalent cation (hereinafter, also referred to as "metal chelate compound") means a compound in which a polyvalent cation and a metal chelating agent are coordinated. The polyvalent cation used in the chelate compound of the polyvalent cation has the same meaning as the polyvalent cation mentioned above, and the preferred aspect is also the same.

The metal chelating agent is not particularly limited as long as it can form a coordination bond with a polyvalent cation (preferably a divalent cation, more preferably a calcium ion).

Examples of the metal chelating agent include oxycarboxylic acids such as tartaric acid, citric acid, and gluconic acid, and aminocarboxylic acids such as iminodiacetic acid (IDA), nitrilotriacetic acid (NTA), and ethylenediaminetetraacetic acid (EDTA). Among these, aminocarboxylic acid is preferable and ethylenediaminetetraacetic acid (EDTA) is more preferable.

The metal chelate compound is preferably a chelate compound of citric acid or ethylenediaminetetraacetic acid (EDTA) and a divalent metal cation, and more preferably a chelate compound of ethylenediaminetetraacetic acid (EDTA) and a calcium ion.

The metal chelate compound is preferably used as a mixed solution (hereinafter, also referred to as "metal chelating mixed solution") of a metal chelating agent and an aqueous solution of a polyvalent cation salt in which a salt of a polyvalent cation (preferably a divalent cation, more preferably a calcium ion) and water are mixed.

The mixing ratio of the ionically cross-linkable polymer raw material and the metal chelating agent can be set appropriately in consideration of the number of moles of a metal such as Na in the ionically cross-linkable polymer, the chelating valence of the metal chelating agent, and the valence of the polyvalent cation.

-pH of water phase-

The pH of the water phase is preferably 7 to 9, and more preferably 7.2 to 8.0.
As the pH adjusting agent for adjusting the pH, a known pH adjusting agent can be used.
The pH of the water phase is a value measured at 25°C using a pH meter, and is measured using, for example, a desktop pH meter (product name: pH METER D-51, manufactured by HORIBA, Ltd.).

<<Oil phase>>

The oil phase used in the step A includes the edible oil or fat having a melting point of 30°C or less.
The edible oil or fat having a melting point of 30°C or less has the same meaning as the edible oil or fat at 30°C or less contained in the core portion mentioned above, and the preferred aspect is also the same.
In addition, as necessary, the oil phase may contain edible oils or fats other than the edible oils or fats having a melting point of 30°C or less (the other edible oils or fats mentioned above) and the components other than the other edible oils or fats mentioned above.

[Mixing ratio]

The mixing ratio of the water phase and the oil phase can be appropriately set. From the viewpoint of outer skin thickness controllability, the mixing ratio of the water phase and the oil phase is preferably 5: 1 to 1: 1 and more preferably 4: 1 to 1: 1 on a mass basis.
The step A is not particularly limited as long as an oil-in-water droplet dispersion liquid in which the oil phase is dispersed in the water phase can be obtained.
As a method for dispersing the oil phase in the water phase, a known dispersion method can be used, and examples thereof include a method of dispersing by ordinary dispersion using a shearing action of a stirrer, an impeller-type agitator, a homomixer, or the like, or by using an emulsifying device for such as Shirasu Porous Glass (SPG) membrane emulsification and microchannel emulsification, and a method of using a microchannel having a T-shape, a Y-shape, or the like.
The temperature of the oil-in-water droplet dispersion liquid in the step A is not limited and merely required to be appropriately determined in a range of, for example, 20°C to 30°C.

<Step B>

The step B is a step of mixing the oil-in-water droplet dispersion liquid prepared in the step A and the edible oil or fat to obtain an oil-in-water-in-oil droplet dispersion liquid in which the oil-in-water droplets are dispersed in the edible oil or fat.
Examples of the edible oil or fat used in the step B (hereinafter, may also be referred to as "outer oil phase" or "edible oil or fat of outer oil phase") include the edible oil or fat mentioned above, and the preferred aspects also have the same meaning.
In addition, the edible oil or fat of the outer oil phase may be the same as or different from the edible oil or fat of the oil phase used in the step A. The edible oil or fat of the outer oil phase is preferably the same as the edible oil or fat of the oil phase used in the step A from the viewpoint that even if a small amount of the outer oil phase is mixed in the succeeding separation step, the problem is unlikely to occur in terms of edibility and the like.
From the viewpoint of outer skin thickness controllability, it is preferable that the mixed solution of the oil-in-water droplet dispersion liquid and the edible oil or fat in the outer oil phase further contains a surfactant. The surfactant is not particularly limited as long as the oil-in-water droplets are dispersed in the oil or fat in the outer oil phase.
As the surfactant, a nonionic surfactant used in foods is suitably used from the viewpoint of outer skin thickness controllability. Examples of the nonionic surfactant include a glycerin fatty acid ester and a sorbitan fatty acid ester.
In a case where the nonionic surfactant corresponds to the above-mentioned edible oil or fat having a melting point of 30°C or less, the nonionic surfactant corresponding to the above-mentioned edible oil or fat having a melting point of 30°C or less is included in the above-mentioned edible oil or fat having a melting point of 30°C or less.
Among these, as the nonionic surfactant, a glycerin fatty acid ester is preferable, and a glycerin fatty acid ester having an HLB value of 6 or less is more preferable.
HLB generally means a hydrophilic-hydrophobic balance as used in the field of surfactant. The HLB value is calculated using the kawakami formula shown below. In addition, in a case where a commercially available product is used as the glycerin fatty acid ester, commercially available catalog data is preferentially adopted.

$$HLB = 7 + 11.7\log (Mw/Mo)$$

Here, Mw represents the molecular weight of the hydrophilic group, and Mo represents the molecular weight of the hydrophobic group.

Examples of the glycerin fatty acid ester having an HLB value of 6 or less include diglyceryl monostearate (HLB value: 5.0), glyceryl monomyristate (HLB value: 3.5), glyceryl monostearate (HLB value: 3.5), tetraglyceryl pentastearate (HLB value: 2.6), and hexaglyceryl pentastearate (HLB value: 4.5).

The glycerin fatty acid ester may be a synthetic product or a commercially available product.

Examples of the commercially available glycerin fatty acid ester include "NIKKOL (registered trademark) DGMS" (diglyceryl monostearate, HLB value: 5.0), "NIKKOL (registered trademark) MGM" (glyceryl monomyristate, HLB value: 3.5), and "NIKKOL (registered trademark) MGS-F50V" (glyceryl monostearate, HLB value: 3.5) of Nikko Chemicals Co., Ltd., and "SY-Glyster PS-3S" (tetraglyceryl pentastearate, HLB value: 2.6), "SY-Glyster PS-5S" (hexaglyceryl pentastearate, HLB value: 4.5), "SY-Glyster CRS-75" (condensed polyglyceryl ricinoleate, HLB value: 3.3) of Sakamoto Yakuhin Kogyo Co., Ltd.

One kind of the surfactant may be used singly or two or more kinds thereof may be used concurrently.

In a case where the surfactant is used in the step B, the content of the surfactant is preferably 0.05% by mass to 3% by mass, more preferably 0.1% by mass to 2% by mass, and still more preferably 0.5% by mass to 1.5% by mass with respect to the total mass of the edible oils or fats contained in the outer oil phase.

The method of mixing the oil-in-water droplet dispersion liquid and the edible oil or fat of the outer oil phase may be, for example, a method of dispersing by ordinary dispersion using a shearing action of a stirrer, an impeller-type agitator, a cylindrical mill, a homomixer, or the like, or by using an emulsifying device, a method by using a membrane emulsifying device, or the like, but is preferably a method by using a membrane emulsifying device, or mixing by using a microchannel device from the viewpoint of an excellent outer skin thickness and excellent reduction of granular feeling.

Details of the microchannel device will be described later.

<Step C>

The step C is a step of obtaining a mixed solution of the dispersion liquid of the oil-in-water-in-oil droplet prepared in the step B and the edible oil or fat containing the pH lowering agent.

It is presumed that by mixing the dispersion liquid of the oil-in-water-in-oil droplet and the edible oil or fat containing the pH lowering agent, the pH of the water phase portion of the oil-in-water-in-oil droplet is decreased by the pH lowering agent, the metal ions of the metal chelate compounds contained in the water phase are liberated, and the ionically cross-linkable polymer contained in the water phase portion is cross-linked via the liberated metal ions to form edible oil-encapsulating microcapsules.

The pH lowering agent used in edible oil or fat containing a pH lowering agent (hereinafter, also referred to as "hydrogenated oil") is not particularly limited as long as it is a compound capable of lowering the pH of a water phase component of oil-in-water-in-oil droplet, and is capable of mixing with edible oil or fat. It should be noted that the water phase component of the oil-in-water-in-oil droplet is a water phase component in the oil-in-water droplet used for forming the oil-in-water-in-oil droplet.

As the pH lowering agent, an oxo acid is preferable, an oxo acid having 2 to 4 carbon atoms is more preferable, an oxo acid having 2 or 3 carbon atoms is still more preferable, and acetic acid is particularly preferable.

The oxo acid refers to a compound in which a hydroxy group (-OH) and an oxo group (= O) are bonded to the same atom, and the hydroxy group donates an acidic proton.

The content of the pH lowering agent is preferably 0.05% by mass to 15% by mass, and more preferably 0.5% by mass to 10% by mass with respect to the total mass of the hydrogenated oil.

One kind of the pH lowering agent may be used singly or two or more kinds thereof may be used concurrently.

Examples of the edible oil or fat in the hydrogenated oil include the above-mentioned edible oil or fat, and the preferred aspects are also the same. In addition, the edible oil or fat in the hydrogenated oil may be the same as or different from the edible oil or fat used in the step A and the step B, but is preferably the same as the edible oil or fat used in the step A and the step B.

The content of the edible oil or fat in the hydrogenated oil is preferably 85% by mass to 99.95% by mass, and more preferably 90% by mass to 99.5% by mass with respect to the total mass of the hydrogenated oil.

The pH of the water phase in the mixed solution obtained in the step C is preferably 6.9 or less, more preferably 2 or more and 6.7 or less, and still more preferably 3 or more and 6.5 or less. The pH of the mixed solution can be adjusted to a desired pH by using the above-mentioned pH lowering agent.

The pH of the water phase in the mixed solution was determined by separating and extracting the water phase from the mixed solution immediately after mixing the dispersion liquid of oil-in-water-in-oil droplet and the edible oil or fat containing the pH lowering agent, and measuring by using a pH meter at 25°C. The pH is measured using, for example, a desktop pH meter (product name: pH METER D-51, manufactured by HORIBA, Ltd.).

The method of mixing the dispersion liquid of the oil-in-water-in-oil droplets and the hydrogenated oil (edible oil or fat containing a pH lowering agent) may be, for example, a method of dispersing by ordinary dispersion using a shearing action of a stirrer, an impeller-type agitator, a homomixer, or the like, or by using an emulsifying device, but from the viewpoint of excellent outer skin thickness controllability and excellent reduction of granular feeling, mixing by using a microchannel device is preferable.

Details of the microchannel device will be described later.

<Heating step>

In order to obtain edible oil-encapsulating microcapsules having excellent heat resistance, in the manufacturing method of edible oil-encapsulating microcapsules according to the first embodiment, a step of heating the edible oil-encapsulating microcapsules at a temperature of 70°C or more for 1 minute or longer (hereinafter, also referred to as "heating step") is preferably further included.

The heating step may be performed at any time point after the step C has been performed.

For example, a heating step may be performed after the step C. In addition, for example, a separation step mentioned later may be performed after the step C, and a heating step may be performed after the separation step.

In the heating step, it is preferable to heat the edible oil-encapsulating microcapsules in a state of being dispersed in a solvent.

By heating the edible oil-encapsulating microcapsules in a state of being dispersed in a solvent, the amount of water contained in the shell portion is reduced, and the hardness of the shell portion is likely to be improved. The reason is presumed as follows.

It is presumed that inside the shell portion of the plant oil-encapsulating microcapsules, a large amount of a portion in which the ionically cross-linkable polymer is not crosslinked (also referred to as "uncross-linked portion" in this paragraph) is contained as compared with the surface side of the shell portion. By heating the edible oil-encapsulating microcapsules in a state of being dispersed in a solvent, heat is likely to be applied to the entire edible oil-encapsulating capsules in a more uniform state. Thereby, the cross-linking of the uncross-linked portion of the ionically cross-linkable polymer inside the shell portion is promoted. As a result, the uncross-linked portion of the ionically cross-linkable polymer in the shell portion is reduced, and the volume of the shell portion is also reduced accordingly. It is presumed that the decrease in the volume of the shell portion reduces the amount of water contained in the shell portion and thus improves the hardness of the shell portion.

The heating device may be either a non-contact heating device or a contact heating device.

As the non-contact heating device, for example, a known device such as a heating device using radiant heat, a microwave heating device, or a hot air heating device can be adopted.

From the viewpoint of suppressing the oxidation of edible oils or fats and from the viewpoint of adequately adjusting the content of water contained in the shell portion, the temperature is preferably 50°C or more and 100°C or less, more preferably 55°C or more and 95°C or less, and still more preferably 60°C or more and 90°C or less.

The temperature in a heating method using a non-contact heating device indicates the ambient temperature. The temperature in the heating method using the contact heating device indicates the temperature of the article that comes into direct contact with the container containing the edible oil-encapsulating microcapsule or the microcapsule dispersion liquid.

From the viewpoint of suppressing the oxidation of edible oils or fats and from the viewpoint of adequately adjusting the content of water contained in the shell portion, the heating time is preferably 1 minute or more and 60 minutes or less, more preferably 3 minutes or more and 40 minutes or less, and still more preferably 4 minutes or more and 30 minutes or less.

<<Separation step>>

In the manufacturing method of the edible oil-encapsulating microcapsules according to the first embodiment, it is preferable that a step of separating the edible oil-encapsulating microcapsules (hereinafter, also referred to as "separation step") is further included after the step C.

The separation step is not particularly limited as long as the edible oil-encapsulating microcapsules can be separated from the microcapsule dispersion liquid.

Examples of the separation method of the edible oil-encapsulating microcapsules include ordinary separation methods such as decantation, filtration, and extraction.

[Other steps]

In the manufacturing method of the edible oil-encapsulating microcapsules according to the first embodiment, steps (other steps) other than the step A, the step B, the step C, and the separation step may be further included, as necessary.

The other steps may include, for example, a washing step of washing the separated edible oil-encapsulating microcapsules with water or the like, and a step of dispersing the edible oil-encapsulating microcapsules obtained in the separation step in a solvent (preferably water).

From the viewpoint of excellent outer skin thickness controllability and excellent reduction of granular feeling, in the manufacturing method of the edible oil-encapsulating microcapsules according to the first embodiment, it is preferable that at least the step B and the step C is performed within the microchannel and a step of mixing the dispersion liquid of oil-in-water-in-oil droplet and the edible oil or fat containing a pH lowering agent within the above-described microchannel.

Hereinafter, a device having a microchannel used in the manufacturing method of the edible oil-encapsulating microcapsules according to the first embodiment (hereinafter, also referred to as "microchannel device used in the present disclosure") will be described in detail. It should be noted that the microchannel device described below is an example, and the present disclosure is not limited to this.

<Microchannel device>

A microchannel device used in the present disclosure preferably includes a first base having a defining surface that defines a flow channel and containing a polymer that contains a fluorine atom, and a second base having a defining surface that defines the flow channel together with the defining surface of the first base, having solvent resistance, and coming into contact with the first base. In an embodiment of the microchannel device described above, the arithmetic average roughness Ra of the surface of the first base, exposed by peeling the second base from the first base, is preferably 1 μm or more. According to one embodiment of the microchannel device described above, the microchannel device having solvent resistance and bondability can be obtained, and the edible oil-encapsulating microcapsules that are excellent in suppressing the outer skin thickness and reducing granular feeling can be suitably obtained.

In the present disclosure, the "bondability" refers to the adhesiveness (also referred to as the adhesion) between the first base and the second base. In the present disclosure, "solvent resistance" means resistance to an organic solvent.

An assumptive reason for providing a microchannel device that exhibits the above-described effects in the microchannel device used in the present disclosure will be described below.

The microchannel device according to one embodiment of the present disclosure includes a first base containing a polymer that contains a fluorine atom and a second base having solvent resistance. The first base and the second base as described above improve the solvent resistance of the microchannel device. Furthermore, in the microchannel device according to one embodiment of the present disclosure, an arithmetic average roughness Ra of a surface (hereinafter, may be referred to as an "exposed surface") of the first base, exposed by peeling the second base from the first base, is 1 μm or more. The arithmetic average roughness Ra of the exposed surface indicates a fracture aspect caused by peeling. For example, in a case where the adhesiveness between the first base and the second base is lower than the cohesive force that acts in the inside of the first base or the second base, the peeling occurs mainly at the interface between the first base and the second base in the process of peeling the second base from the first base. In a case where the peeling occurs at the interface between the first base and the second base, the arithmetic average roughness Ra of the exposed surface is decreased. On the other hand, in a case where the adhesiveness between the first base and the second base is higher than the cohesive force that acts inside the first base or the second base, the fracture occurs mainly in the inside of the first base or the second base in the process of peeling the second base from the first base. In a case where the fracture occurs mainly in the inside of the first base or the second base, the arithmetic average roughness Ra of the exposed surface is increased. That is, the characteristic that "the arithmetic average roughness Ra of the exposed surface is 1 μm or more" indicates that the fracture that occurs in the inside of the first base or the second base predominates in the process of peeling the second base from the first base, in other words, it indicates that the adhesiveness between the first base and the second base is high. Therefore, since the microchannel device used in the present disclosure has excellent solvent resistance and bondability, the edible oil-encapsulating microcapsules that are excellent in suppressing the outer skin thickness and reducing granular feeling can be suitably obtained. Hereinafter, the microchannel device will be specifically described.

<<Arithmetic average roughness Ra of exposed surface>>

In the microchannel device used in the present disclosure, the arithmetic average roughness Ra of the surface (that is, the exposed surface) of the first base, exposed by peeling the second base from the first base, is preferably 1

μm or more. From the viewpoint of improving the bondability, the arithmetic average roughness Ra of the exposed surface is preferably 2 μm or more, more preferably 3 μm or more, and particularly preferably 5 μm or more. From the viewpoint of the bondability, the upper limit of the arithmetic average roughness Ra of the exposed surface is not limited. The upper limit of the arithmetic average roughness Ra of the exposed surface may be, for example, 300 μm, 500 μm, or 1,000 μm. The arithmetic average roughness Ra of the exposed surface is preferably 1 μm to 1,000 μm, more preferably 2 μm to 500 μm, and particularly preferably 3 μm to 300 μm.

In the present disclosure, the arithmetic average roughness Ra of the exposed surface is measured according to the following method. First, the second base is peeled from the first base of the microchannel device. The peeling angle is 90°. In other words, the second base is peeled from the first base of the microchannel device at an angle of 90°. By peeling the second base from the first base of the microchannel device, the microchannel device is divided into two test pieces. The two test pieces include a test piece separated on a first base side and a test piece separated on a second base side. The test piece separated on the first base side (hereinafter, referred to as the "first test piece") may include a part of the second base. The arithmetic average roughness Ra of the surface of the first test piece, where the surface has been exposed by the peeling (however, the region in which the flow channel of the microchannel device is defined is excluded) is measured by using a laser optical microscope (for example, VK8550, KEYENCE CORPORATION).

<<First base>>

The microchannel device used in the present disclosure preferably includes a first base having a defining surface that defines a flow channel and containing a polymer that contains a fluorine atom. The first base containing a polymer that contains a fluorine atom improves the solvent resistance of the microchannel device. Hereinafter, the first base will be specifically described.

The kind of the polymer that contains a fluorine atom is not limited. The polymer that contains a fluorine atom in the microchannel device used in the present disclosure includes a known polymer that contains a fluorine atom. Examples of the polymer that contains a fluorine atom include a fluoropolyether, a polytetrafluoroethylene, and a perfluoroalkoxyethylene. From the viewpoint of solvent resistance and transparency, the polymer that contains a fluorine atom is preferably a fluoropolyether. The fluoropolyether is a polymer that contains a fluoroalkyleneoxy group. The fluoropolyether may contain two or more kinds of fluoroalkyleneoxy groups. The fluoroalkyleneoxy group may be, for example, a linear fluoroalkyleneoxy group or a branched fluoroalkyleneoxy group. The fluoroalkyleneoxy group is preferably a perfluoroalkyleneoxy group. The fluoroalkyleneoxy group is preferably a fluoroalkyleneoxy group having 2 to 6 carbon atoms and more preferably a fluoroalkyleneoxy group having 2 to 4 carbon atoms. The polymer that contains a fluorine atom may contain, for example, an atom other than the fluorine atom and the carbon atom. The polymer that contains a fluorine atom preferably contains a silicon atom. Examples of the commercially available product of the polymer that contains a fluorine atom include X-71C-8115A/B, X-71C-8015A/B, X-71-358-4, and X-71-359 (all of which are a fluorine elastomer, Shin-Etsu Chemical Co., Ltd.). The first base may include two or more kinds of polymers that contain a fluorine atom.

The content of the polymer that contains a fluorine atom in the first base is not limited. From the viewpoint of improving solvent resistance, the content of the polymer that contains a fluorine atom in the first base is preferably 70% by mass to 100% by mass, preferably 80% by mass to 100% by mass, and particularly preferably 90% by mass to 100% by mass, with respect to the total mass of the first base.

The defining surface of the first base defines the flow channel of the microchannel device. That is, the defining surface of the first base is the surface of the base that faces the flow channel. The number of defining surfaces of the first base is not limited. The first base may have two or more defining surfaces. The shape of the defining surface of the first base is not limited. The defining surface of the first base may be, for example, a flat surface or a curved surface.

In a certain embodiment, the contact angle of water on the defining surface of the first base (hereinafter, simply referred to as the "contact angle" in this paragraph) is preferably 90° or more, more preferably 95° or more, and particularly preferably 100° or more. In a case where the contact angle is 90° or more, the affinity of the liquid containing oil with respect to the defining surface of the first base is decreased. The decrease in the affinity of the liquid containing oil with respect to the defining surface of the first base promotes, for example, the formation of oil droplets. The upper limit of the contact angle is not limited. The upper limit of the contact angle may be, for example, 140°, 130°, or 120°. The contact angle is preferably 90° to 140°, more preferably 95° to 130°, and particularly preferably 100° to 120°.

In the microchannel device used in the present disclosure, the contact angle of water is measured by the following method. At room temperature of 25°C, 2 μL of pure water is added dropwise onto a target surface that has been made to be horizontal. The contact angle of the liquid droplet one second after the contact of the pure water with the target surface is measured using a contact angle meter (for example, DMs-401, Kyowa Interface Science Co., Ltd.). The obtained value is adopted as the contact angle of water.

The polymer that contains a fluorine atom generally tends to exhibit hydrophobicity. In a microchannel device formed of a hydrophobic material, the hydrophobic solid surface (for example, the defining surface of the first base) that defines a flow channel may adsorb a sample (for example, an enzyme and a protein) that flows through the flow channel.

For example, in an analysis using a microchannel device, the adsorption of the sample to the solid surface that defines a flow channel may result in a decrease in the analytical performance and reproducibility of the analysis. In addition, for example, in a production method for an oil droplet using a microchannel device, it is preferable that the solid surface that defines the flow channel has a high affinity with respect to a liquid containing water that is used as a solvent. From the viewpoint of suitability for some use applications as described above, it is preferable to improve the hydrophilicity of at least a part of a solid surface (for example, the defining surface of the first base) that defines a flow channel of a microchannel device according to a certain embodiment.

In a certain embodiment of the microchannel device used in the present disclosure, the defining surface of the first base preferably includes a region where the surfactant is adsorbed. That is, it is preferable that the surfactant is adsorbed to at least a part of the defining surface of the first base. The region in which the surfactant is adsorbed improves the hydrophilicity of the solid surface that defines the flow channel. The improvement of the hydrophilicity of the solid surface that defines the flow channel promotes, for example, the formation of water droplets. On the defining surface of the first base, the position of the region in which the surfactant is adsorbed is not limited. The region on which the surfactant is adsorbed may be disposed on an entirety or a part of the defining surface of the first base. The aspect of adsorption is not limited. The adsorption may be, for example, physical adsorption or chemical adsorption. The surfactant adsorbed on the defining surface of the first base is detected, for example, by the time of flight secondary ion mass spectrometry described later. The kind of the surfactant adsorbed on the defining surface of the first base may be one kind or two or more kinds.

The kind of the surfactant in the microchannel device used in the present disclosure is not limited. The surfactant includes known surfactants. Examples of the surfactant include a cationic surfactant, an anionic surfactant, an amphoteric surfactant, and a nonionic surfactant. From the viewpoint of improving hydrophilicity, the surfactant is preferably a nonionic surfactant. From the viewpoint of improving hydrophilicity, the nonionic surfactant is preferably a polymer, more preferably an alkylene oxide polymer, and particularly preferably an ethylene oxide-propylene oxide copolymer.

The alkylene oxide polymer is a polymer containing an alkyleneoxy group. The alkylene oxide polymer that is used as a surfactant can be firmly adsorbed on the solid surface that defines a flow channel, and the hydrophilic group of the alkylene oxide polymer adsorbed on the solid surface that defines a flow channel is stably disposed to face the flow channel. As a result, in addition to improving the hydrophilicity of the solid surface defining the flow channel, for example, the alkylene oxide polymer used as the surfactant can also suppress the decrease in the hydrophilicity of the solid surface defining the flow channel with time. For example, the hydrophilicity of the solid surface on which the alkylene oxide polymer is adsorbed as a surfactant is unlikely to decrease even in an environment in which the speed of the fluid that flows through the flow channel is high.

The alkylene oxide polymer may contain two or more kinds of alkyleneoxy groups. The alkylene oxide polymer may contain an alkyleneoxy group in the main chain, the side chain, or both the main chain and the side chain. The alkylene oxide polymer preferably contains an alkyleneoxy group in the main chain. The alkyleneoxy group may be, for example, a linear alkyleneoxy group or a branched alkyleneoxy group. The alkyleneoxy group is preferably an alkyleneoxy group having 2 to 6 carbon atoms and more preferably an alkyleneoxy group having 2 to 3 carbon atoms. Examples of the alkyleneoxy group include an ethyleneoxy group and a propyleneoxy group. The ethylene oxide-propylene oxide copolymer is a copolymer containing an ethyleneoxy group and a propyleneoxy group.

In addition, from the viewpoint of utilization of the microchannel device in technical fields such as biotechnology, foods, and cosmetics, the surfactant preferably has high bioaffinity. Examples of the commercially available product of the surfactant used in the hydrophilization treatment mentioned later include "Pluronic" (product name, BASF SE, for example, F68 and F127).

The molecular weight of the surfactant is not limited. From the viewpoint of improving hydrophilicity, the molecular weight of the surfactant is preferably 2,000 or more, more preferably 5,000 or more, and particularly preferably 10,000 or more. From the viewpoint of the viscosity of the composition containing the surfactant that is used in the manufacturing method for a microchannel device, the molecular weight of the surfactant is preferably 100,000 or less, more preferably 50,000 or less, and particularly preferably 20,000 or less. The molecular weight of the surfactant is preferably 2,000 to 100,000, more preferably 5,000 to 50,000, and particularly preferably 10,000 to 20,000.

In the present disclosure, the molecular weight of a surfactant having a molecular weight distribution shall be indicated by a weight-average molecular weight. In the present disclosure, the weight-average molecular weight is measured by gel permeation chromatography (GPC).

The amount of the surfactant adsorbed on the defining surface of the first base is indicated by the ratio of the amount of secondary ions of the surfactant to the total amount of ions detected by the time of flight secondary ion mass spectrometry (TOF-SIMS). From the viewpoint of improving hydrophilicity, the ratio of the amount of secondary ions of the surfactant adsorbed on the defining surface of the second base to the total amount of ions detected by TOF-SIMS (hereinafter, referred to as "the adsorption amount of the surfactant" in this paragraph) is preferably 0.01 or more, more preferably 0.015 or more, still more preferably 0.02 or more, and particularly preferably 0.025 or more. The upper limit of the adsorption amount of the surfactant is not limited. The upper limit of the adsorption amount of the surfactant may be, for example, 0.5, 0.3, or 0.1. The adsorption amount of the surfactant is preferably 0.01 to 0.5, more preferably 0.015 to 0.3, still more preferably 0.02 to 0.1, and particularly preferably 0.025 to 0.1.

In the present disclosure, the ratio of the amount of secondary ions of the surfactant adsorbed on a target surface to the total amount of ions detected by the time of flight secondary ion mass spectrometry (TOF-SIMS) is measured according to the following method. The relative intensity of a fragment ion (a secondary ion) specific to the surfactant, which is standardized with the intensity of total ions, is calculated by TOF-SIMS that is carried out at n = 2 according to the following conditions. The obtained value is adopted as a ratio of the amount of secondary ions of the surfactant adsorbed on the target surface to the total amount of ions detected by TOF-SIMS. In TOF-SIMS, a known time of flight mass spectrometer is used.

- Primary ion: $Bi^{3+}$
- Measurement mode: Bunching Mode
- Measurement area: 300 μm (surface resolution: 128 × 128 pixels)
- Number of accumulations: 16 times
- Polarity: Positive

From the viewpoint of improving hydrophilicity, a contact angle of water to the region in which the surfactant is adsorbed on the defining surface of the first base (hereinafter, simply referred to as a "contact angle" in this paragraph) is preferably 60° or less, more preferably 50° or less, and particularly preferably 40° or less. The lower limit of the contact angle is not limited. The lower limit of the contact angle may be, for example, 5°, 10°, or 20°. The contact angle is preferably 5° to 60°, more preferably 5° to 50°, and particularly preferably 5° to 40°.

The defining surface of the first base may further include a region in which the surfactant is not adsorbed. In a certain embodiment, the defining surface of the first base includes a region in which the surfactant is adsorbed and a region in which the surfactant is not adsorbed. On the defining surface of the first base, the position of the region in which the surfactant is not adsorbed is not limited. The position of the region in which the surfactant is not adsorbed may be determined, for example, according to the kind of fluid. The hydrophilicity of the region in which the surfactant is not adsorbed is low as compared with the hydrophilicity of the region in which the surfactant is adsorbed. In a case of utilizing the relative difference in the hydrophilicity between the region in which the surfactant is adsorbed and the region in which the surfactant is not adsorbed, it is possible to control, for example, flow aspects of a liquid containing oil and a liquid containing water.

In a fluid containing a liquid containing oil and a liquid containing water, the liquid containing oil tends to flow in the vicinity of a solid surface having low hydrophilicity. For example, in a case of joining a liquid containing oil and a liquid containing water in a flow channel defined by a solid surface having low hydrophilicity, it is possible to form water droplets. On the other hand, in a fluid containing a liquid containing oil and a liquid containing water, the liquid containing water tends to flow in the vicinity of a solid surface having high hydrophilicity. For example, in a case of joining a liquid containing oil and a liquid containing water in a flow channel defined by a solid surface having high hydrophilicity, it is possible to form oil droplets.

In a case of utilizing the above-described phenomenon, it is possible to produce, for example, oil droplets that encapsulate water (that is, water-in-oil-in-water droplet), which are dispersed in water. A system containing oil droplets that encapsulate water, which are dispersed in water, is referred to as a W/O/W type emulsion. In addition, for example, it is possible to produce water droplets that encapsulate the oil (so-called, oil-in-water-in-oil droplet) dispersed in the oil. The system containing water droplets that encapsulate oil, which are dispersed in oil, is referred to as an O/W/O type emulsion.

The shape of the first base is not limited. From the viewpoint of ease of manufacture, the shape of the base is preferably a flat plate.

The thickness of the first base is not limited. The thickness of the base may be determined, for example, in a range of 1 mm to 10 mm. The thickness of the base is preferably in a range of 1 mm to 10 mm, more preferably in a range of 1 mm to 5 mm, and particularly preferably in a range of 1.5 mm to 4 mm.

<<Second base>>

The microchannel device used in the present disclosure preferably includes a second base that comes into contact with the first base. The second base has a defining surface that defines the flow channel together with the defining surface of the first base. The flow channel defined by the defining surface of the second base is the same as the flow channel defined by the defining surface of the first base. That is, the flow channel in the microchannel device including the first base and the second base is formed between the first base and the second base. The second base has solvent resistance. The second base having solvent resistance improves the solvent resistance of the microchannel device. Hereinafter, the second base will be specifically described.

In the microchannel device used in the present disclosure, the solvent resistance of the second base is confirmed according to the method shown below. Three test pieces are collected from the second base. The mass of each test piece is measured. The first test piece is immersed in methyl ethyl ketone at 25°C, the second test piece is immersed in toluene at 25°C, and the third test piece is immersed in ethyl acetate at 25°C. The mass of each test piece after the immersion for 27 days is measured. The rate of change in the mass of each test piece is determined according to the following expression. In a case where the rate of change in the mass of each test piece is within ±5%, it is determined that the second base is a base having solvent resistance.

Expression: Rate of change in mass of test piece = ([mass of test piece before test] - [mass of test piece after test])/[mass of test piece before test] × 100

The second base preferably contains a component having solvent resistance. Examples of the component of the second base include a polymer that contains a fluorine atom, glass, and stainless steel. From the viewpoint of improving solvent resistance, the second base preferably contains at least one selected from the group consisting of a polymer that contains a fluorine atom, glass, and stainless steel.

In a certain embodiment, the second base more preferably contains a polymer that contains a fluorine atom. Since the second base including a polymer that contains a fluorine atom exhibits high affinity with respect to the first base containing a polymer that contains a fluorine atom, the bondability is improved. Examples of the polymer that contains a fluorine atom include the polymer that contains a fluorine atom, which is described in the section of "First base" described above. The preferred kind of the polymer that contains a fluorine atom is the same as the preferred kind of the polymer that contains a fluorine atom, which is described in the section of "First base" described above. The kind of the polymer that contains a fluorine atom in the second base may be the same or different from the kind of the polymer that contains a fluorine atom in the first base. From the viewpoint of improving the bondability, it is preferable that the polymer that contains a fluorine atom in the second base contains the same polymer that contains a fluorine atom as the polymer that contains a fluorine atom in the first base. The second base may include one or two or more kinds of polymers that contain a fluorine atom.

In a certain embodiment, the second base preferably contains glass. The kind of glass is not limited. The glass in the present disclosure includes known glass. Examples of the component of the glass include $Al_2O_3$, $B_2O_3$, CaO, $Na_2O$, and $SiO_2$.

In a certain embodiment, the second base preferably contains stainless steel. The kind of stainless steel is not limited. The stainless steel in the present disclosure includes known stainless steel. Examples of the stainless steel include SUS304 and SUS316. It should be noted that the surface of the second base containing stainless steel may be subjected to glass-like coating with a silica sol-gel coating agent.

In the second base, the content of at least one selected from the group consisting of a polymer that contains a fluorine atom, glass, and stainless steel is not limited. In the second base, the content of at least one selected from the group consisting of a polymer that contains a fluorine atom, glass, and stainless steel is preferably 85% by mass to 100% by mass, preferably 90% by mass to 100% by mass, and particularly preferably 95% by mass to 100% by mass, with respect to the total mass of the second base from the viewpoint of improving solvent resistance.

The content of the polymer that contains a fluorine atom in the second base is not limited. In a certain embodiment, the content of the polymer that contains a fluorine atom in the second base is preferably 70% by mass to 100% by mass, preferably 80% by mass to 100% by mass, and particularly preferably 90% by mass to 100% by mass, with respect to the total mass of the second base from the viewpoint of improving solvent resistance.

The content of the glass in the second base is not limited. In a certain embodiment, the content of the glass in the second base is preferably 85% by mass to 100% by mass, preferably 90% by mass to 100% by mass, and particularly preferably 95% by mass to 100% by mass, with respect to the total mass of the second base from the viewpoint of improving solvent resistance.

The content of the stainless steel in the second base is not limited. In a certain embodiment, the content of the stainless steel in the second base is preferably 85% by mass to 100% by mass, preferably 90% by mass to 100% by mass, and particularly preferably 95% by mass to 100% by mass, with respect to the total mass of the second base from the viewpoint of improving solvent resistance.

The defining surface of the second base defines the flow channel of the microchannel device. That is, the defining surface of the second base is the surface of the second base that faces the flow channel. The number of defining surfaces of the second base is not limited. The number of defining surfaces of the second base may be one or two or more. The shape of the defining surface of the second base is not limited. The defining surface of the second base may be, for example, a flat surface or a curved surface.

In a certain embodiment, the contact angle of water on the defining surface of the second base (hereinafter, simply referred to as the "contact angle" in this paragraph) is preferably 90° or more, more preferably 95° or more, and particularly preferably 100° or more. In a case where the contact angle is 90° or more, the affinity of the liquid containing oil with respect to the defining surface of the second base is decreased. The decrease in the affinity of the liquid containing oil with respect to the defining surface of the second base promotes, for example, the formation of oil droplets. The upper limit of the contact angle is not limited. The upper limit of the contact angle may be, for example, 140°, 130°, or 120°. The contact angle is preferably 90° to 140°, more preferably 95° to 130°, and particularly preferably 100° to 120°.

In a certain embodiment, the defining surface of the second base preferably includes a region in which a surfactant is adsorbed. That is, it is preferable that the surfactant is adsorbed to at least a part of the defining surface of the second base.

The region in which the surfactant is adsorbed improves the hydrophilicity of the solid surface that defines the flow channel. The improvement of the hydrophilicity of the solid surface that defines the flow channel promotes, for example, the formation of oil droplets. On the defining surface of the second base, the position of the region in which the surfactant is adsorbed is not limited. The region on which the surfactant is adsorbed may be disposed on an entirety or a part of the defining surface of the second base. From the viewpoint of improving hydrophilicity, it is preferable that on the defining surface of the second base, the region in which the surfactant is adsorbed faces the region in which the surfactant is adsorbed, on the defining surface of the base. This is because, in one compartment of the flow channel, the greater the proportion of the region in which the surfactant is adsorbed in the solid surface that defines the flow channel is, the more the hydrophilicity of the solid surface that defines the flow channel is improved. The aspects of adsorption of the surfactant is not limited. The adsorption of surfactant may be, for example, physical adsorption or chemical adsorption. The surfactant adsorbed on the defining surface of the second base is detected, for example, by the time of flight secondary ion mass spectrometry described above. The kind of the surfactant adsorbed on the defining surface of the second base may be one kind or two or more kinds.

Examples of the surfactant used in the production of the microchannel device used in the present disclosure include the surfactant described in the section of "First base" described above. The preferred kind of the surfactant is the same as the preferred kind of the surfactant described in the section of "First base" described above. The kind of the surfactant adsorbed on the defining surface of the second base may be the same as or different from the kind of the surfactant adsorbed on the defining surface of the first base. It is preferable that the surfactant adsorbed on the defining surface of the second base contains the same surfactant as the surfactant adsorbed on the defining surface of the first base. The preferred molecular weight of the surfactant is the same as the preferred molecular weight of the surfactant described in the section of "First base" described above.

The amount of the surfactant adsorbed on the defining surface of the second base is indicated by the ratio of the amount of secondary ions of the surfactant to the total amount of ions detected by the time of flight secondary ion mass spectrometry (TOF-SIMS). From the viewpoint of improving hydrophilicity of the solid surface that defines the flow channel, the ratio of the amount of secondary ions of the surfactant adsorbed on the defining surface of the second base to the total amount of ions detected by TOF-SIMS (hereinafter, referred to as "the adsorption amount of the surfactant" in this paragraph) is preferably 0.01 or more, more preferably 0.015 or more, still more preferably 0.02 or more, and particularly preferably 0.025 or more. The upper limit of the adsorption amount of the surfactant is not limited. The upper limit of the adsorption amount of the surfactant may be, for example, 0.5, 0.3, or 0.1. The adsorption amount of the surfactant is preferably 0.01 to 0.5, more preferably 0.015 to 0.3, and particularly preferably 0.02 to 0.1.

From the viewpoint of improving hydrophilicity, a contact angle of water to the region in which the surfactant is adsorbed on the defining surface of the second base (hereinafter, simply referred to as a "contact angle" in this paragraph) is preferably 60° or less, more preferably 50° or less, and particularly preferably 40° or less. The lower limit of the contact angle is not limited. The lower limit of the contact angle may be, for example, 5°, 10°, or 20°. The contact angle is preferably 5° to 60°, more preferably 5° to 50°, and particularly preferably 5° to 40°.

The defining surface of the second base may further include a region in which the surfactant is not adsorbed. In a certain embodiment, the defining surface of the second base includes a region in which the surfactant is adsorbed and a region in which the surfactant is not adsorbed. On the defining surface of the second base, the position of the region in which the surfactant is not adsorbed is not limited. The position of the region in which the surfactant is not adsorbed may be determined, for example, according to the kind of fluid. From the viewpoint of controlling the flow aspect, it is preferable that on the defining surface of the second base, the region in which the surfactant is not adsorbed faces the region in which the surfactant is not adsorbed, on the defining surface of the base.

The shape of the second base is not limited. From the viewpoint of ease of manufacture, the shape of the second base is preferably a flat plate.

The thickness of the second base is not limited. The thickness of the second base may be determined, for example, in a range of 1 mm to 20 mm.

Hereinafter, a microchannel device used in the present disclosure will be described with reference to Fig. 1, Fig. 2, Fig. 3, and Fig. 4. Fig. 1 is a schematic perspective view illustrating a microchannel device according to a certain embodiment of the present disclosure. Fig. 2 is a schematic cross-sectional view taken along a line II-II illustrated in Fig. 1. Fig. 3 is a schematic exploded perspective view of the microchannel device illustrated in Fig. 1. Fig. 4 is a schematic plan view of the microchannel device illustrated in Fig. 1.

A microchannel device 100 illustrated in Fig. 1 includes a first base 10 and a second base 20. The second base 20 is disposed on the first base 10. The second base 20 is in contact with the first base 10.

As illustrated in Fig. 2 and Fig. 3, a flow channel 30 of the microchannel device 100 is formed between the first base 10 and the second base 20. As illustrated in Fig. 2, the flow channel 30 is a space surrounded by a wall surface of a groove (that is, a recessed part) formed on a surface of the first base 10 and a surface of the second base 20. The surface that surrounds the flow channel 30 is the defining surface in the present disclosure. The shape of the flow channel 30 corresponds to the shape of the groove formed on the surface of the first base 10.

As illustrated in Fig. 3 and Fig. 4, the microchannel device 100 includes four opening portions that penetrate the first base 10. The four opening portions include an opening portion 40, an opening portion 41, an opening portion 42, and an opening portion 43. Each opening portion is connected to the flow channel 30. For example, the three opening portions are used as an introduction part for a fluid, and the remaining one opening portion is used as a discharge part for a fluid.

<<Flow channel>>

The flow channel of the microchannel device used in the present disclosure is preferably defined by a defining surface of a first base and a defining surface of a second base.

The shape of the flow channel is not limited. Examples of the cross-sectional shape of the flow channel include a quadrangular shape, a circular shape, and a semi-circular shape. For example, a flow channel having a quadrangular shape in a cross section is defined by being surrounded by four plane-shaped defining surfaces. For example, a flow channel having a circular shape in a cross section is defined by being surrounded by one cylinder-shaped defining surface or two curved defining surfaces. For example, a flow channel having a semi-circular shape in a cross section is defined by being surrounded by one curved defining surface and one plane-shaped defining surface.

The width of the flow channel is not limited. The width of the flow channel may be determined, for example, in a range of 1 μm to 2,000 μm. The width of the flow channel is preferably in a range of 5 μm to 1,000 μm, more preferably in a range of 10 μm to 500 μm, and particularly preferably in a range of 20 μm to 400 μm.

The flow channel preferably includes a main flow channel part and at least one branch flow channel part branched from the main flow channel. In the flow channel having the above-described structure, at least two kinds of fluids can be joined at a junction of the main flow channel part with the branch flow channel part. For example, in a case of introducing a first fluid into the main flow channel part and introducing a second fluid into a first branch flow channel part branched from the main flow channel part, it is possible to join the second fluid with respect to the first fluid. For example, in a case of introducing a first fluid into the main flow channel part and introducing a second fluid into a first branch flow channel part branched from the main flow channel part, and in a case of introducing a third fluid into a second branch flow channel part branched from the main flow channel part downstream of a junction of the main flow channel part with the first branch flow channel part, it is possible to sequentially join the second fluid and the third fluid with respect to the first fluid. The number of branch flow channel parts branched from the main flow channel may be one or two or more. The number of junctions of the main flow channel part with the branch flow channel may be one or two or more. The shape of the junction of the main flow channel part with the branch flow channel is not limited. The shape of the junction of the main flow channel part with the branch flow channel may be determined, for example, according to the number of branch flow channel parts and the joining position of the branch flow channel part with respect to the main flow channel part.

Examples of the shape of the junction of the main flow channel part with the branch flow channel include a T-shape, a Y-shape, and a cross shape. From the viewpoint of easily obtaining the microcapsules in which the granular feeling is reduced and outer skin thickness controllability is excellent, the shape of the junction is preferably a T-shape.

Hereinafter, the configuration of the flow channel will be described with reference to Fig. 5 and Fig. 6. Fig. 5 is a schematic plan view illustrating a flow channel of a microchannel device used in the present disclosure. Fig. 6 is a schematic plan view illustrating a flow channel of a microchannel device used in the present disclosure. However, the configuration of the flow channel is not limited to the configuration shown below.

In a certain embodiment of the microchannel device used in the present disclosure, it is preferable that the flow channel includes a first flow channel part, a second flow channel part that joins the first flow channel part, and a third flow channel part that is connected to a junction of the first flow channel part with the second flow channel part. In the above-described embodiment, the flow channel may include, for example, four or more flow channel parts and two or more junctions.

In an example of a flow channel including such constitutional elements as described above, a flow channel 31 illustrated in Fig. 5 includes a first flow channel part 31a, a second flow channel part 31b that joins the first flow channel part 31a, and a third flow channel part 31c that is connected to a junction 31A of the first flow channel part 31a with the second flow channel part 31b. The shape of the junction 31A is a T-shape.

In the flow channel 31 illustrated in Fig. 5, for example, the first fluid introduced into the first flow channel part 31a joins the second fluid introduced into the second flow channel part 31b at the junction 31A. The first fluid and the second fluid that have been joined at the junction 31A flow through the third flow channel part 31c.

For example, in a method of joining a liquid containing oil and a liquid containing water in the flow channel 31 illustrated in Fig. 5 to produce oil droplets, it is preferable that the solid surface that defines the third flow channel part 31c (preferably, the first flow channel part 31a, the second flow channel part 31b, and the third flow channel part 31c) includes a region in which the surfactant is adsorbed. The region in which the surfactant is adsorbed reduces the affinity of the liquid containing oil with respect to the solid surface that defines the flow channel and promotes the formation of oil droplets.

In a certain embodiment of the microchannel device used in the present disclosure, it is preferable that the flow channel includes a first flow channel part, a second flow channel part that joins the first flow channel part, a third flow channel part that is connected to a junction of the first flow channel part with the second flow channel part, a fourth flow channel part that joins the third flow channel part, and a fifth flow channel part that is connected to a junction of the third flow channel part with the fourth flow channel part. In the above-described embodiment, the flow channel may include, for example, six or more flow channel parts and three or more junctions.

In an example of a flow channel including such constitutional elements as described above, a flow channel 32 illustrated in Fig. 6 includes a first flow channel part 32a, a second flow channel part 32b that joins the first flow channel part 32a, a third flow channel part 32c that is connected to a junction 32A of the first flow channel part 32a with the second flow channel part 32b, a fourth flow channel part 32d that joins the third flow channel part 32c, and a fifth flow channel part 32e that is connected to a junction 32B of the third flow channel part 32c with the fourth flow channel part 32d. The shape of the junction 32A is a T-shape. The shape of the junction 32B is a T-shape.

In the flow channel 32 illustrated in Fig. 6, for example, the first fluid introduced into the first flow channel part 32a joins the second fluid introduced into the second flow channel part 32b at the junction 32A. The first fluid and the second fluid that have been joined at the junction 32A go through the third flow channel part 32c and join the third fluid introduced into the fifth flow channel part 32e at the junction 32B. The first fluid, the second fluid, and the third fluid that have been joined at the junction 32B flow through the fourth flow channel part 32d.

For example, in a method of joining a liquid containing oil as the first fluid, a liquid containing water as the second fluid, and a liquid containing water as the third fluid in the flow channel 32 illustrated in Fig. 6 to produce a W/O/W type emulsion (that is, a system containing oil droplets that encapsulate water, which are dispersed in water), it is preferable that the solid surface that defines the first flow channel part 32a and the second flow channel part 32b include a region in which the surfactant is not adsorbed. The region in which the surfactant is not adsorbed reduces the affinity of the liquid containing water with respect to the solid surface that defines the flow channel and promotes the formation of water droplets. Further, it is preferable that the solid surface that defines the fourth flow channel part 32d and the fifth flow channel part 32e include a region in which the surfactant is adsorbed. The region in which the surfactant is adsorbed reduces the affinity of the liquid containing oil with respect to the solid surface that defines the flow channel and promotes the formation of oil droplets. For example, by utilizing the above-described characteristics, in a case of joining the first fluid (the liquid containing oil) introduced into the first flow channel part 32a, the second fluid (the liquid containing water) introduced into the second flow channel part 32b, and the third fluid (the liquid containing water) introduced into the fifth flow channel part 32e, the water in the second fluid (the liquid containing water) undergoes a process of being covered with the oil in the first fluid (the liquid containing oil) and then the water in the third fluid (the liquid containing water), whereby a W/O/W type emulsion is obtained.

It is preferable that a manufacturing method for a microchannel device used in the present disclosure includes (1) preparing a first base having a surface that has a groove and containing a polymer that contains a fluorine atom, (2) subjecting the surface of the first base to a plasma treatment in a presence of an ammonia gas, (3) preparing a second base having a surface for coming into contact with the first base and having solvent resistance, (4) subjecting the surface of the second base to a plasma treatment in a presence of an ammonia gas, and (5) bringing the surface of the second base, subjected to the plasma treatment, into contact with the surface of the first base, subjected to the plasma treatment, to form a flow channel defined by the first base and the second base.

Hereinafter, each stage of the manufacturing method for a microchannel device will be specifically described.

[Step (1)]

In the step (1), a first base having a surface that has a groove and containing a polymer that contains a fluorine atom is prepared. Hereinafter, a surface that has a groove in the first base may be referred to as a "specific surface of the first base".

Examples of the polymer that contains a fluorine atom include the polymer that contains a fluorine atom, which is described in the section of "First base" described above. The preferred kind of the polymer that contains a fluorine atom is the same as the preferred kind of the polymer that contains a fluorine atom, which is described in the section of "First base" described above.

The specific surface of the first base includes a region that comes into contact with the second base in the step (5) described later and a region that defines a flow channel that is formed in the step (5) described later. The specific surface of the first base is subjected to a plasma treatment in the step (2) described later and then is brought into contact with the second base in the step (5) described later. The shape of the groove is not limited. Examples of the cross-sectional shape of the groove include a quadrangular shape and a semi-circular shape. The method of forming the groove is not limited. Examples of the method for forming the groove include a method using a mold produced by photolithography. A large number of flow channels of known microchannel devices are formed, for example, by using a mold produced by photolithography. The first base having a groove is obtained, for example, by bringing a silicone or a composition containing a silicone material into contact with a mold produced by photolithography and then curing the composition. The shape of the protruding part of the mold corresponds to, for example, the shape of the groove (that is, the recessed part) of the first base.

The shape of the first base is not limited. From the viewpoint of ease of manufacture, the shape of the first base is preferably a flat plate. For example, the flat plate-shaped first base has a first main surface and a second main surface on a side opposite to the first main surface. In the flat plate-shaped first base, the specific surface of the first base may be the first main surface or the second main surface.

[Step (2)]

In the step (2), the specific surface of the first base is subjected to a plasma treatment (hereinafter, may be referred to as a "first plasma treatment" in this section) in the presence of the ammonia gas. In the first plasma treatment, a functional group such as an $-NH_3$ group is formed on the specific surface of the first base. The functional group such as an $-NH_3$ group formed on the specific surface of the first base improves the adhesiveness of the first base to the second base in the step (5) described later. In the plasma treatment, for example, a known plasma treatment apparatus may be used. The gas that is used in the first plasma treatment may contain a gas other than the ammonia gas as long as the gist of the present disclosure is maintained.

The flow rate of the ammonia gas in the first plasma treatment is preferably 1 sccm to 500 sccm, more preferably 10 sccm to 300 sccm, and particularly preferably 50 sccm to 150 sccm.

The pressure in the first plasma treatment is preferably 10 Pa to 300 Pa, more preferably 20 Pa to 200 Pa, and particularly preferably 50 Pa to 150 Pa.

The treatment time in the first plasma treatment is preferably 30 seconds to 700 seconds, more preferably 50 seconds to 500 seconds, and particularly preferably 100 seconds to 300 seconds.

The output in the first plasma treatment is preferably 10 W to 1,000 W, more preferably 20 W to 500 W, and particularly preferably 50 W to 150 W. The output is a radio frequency (RF) output.

The manufacturing method for a microchannel device may include, after the first plasma treatment, subjecting the specific surface of the first base to a plasma treatment (hereinafter, may be referred to as a "second plasma treatment" in this section) in the presence of the oxygen gas. In the second plasma treatment, functional groups such as an -OH group and a -OOH group are formed on the specific surface of the first base. The functional groups such as an -OH group and a -OOH group formed on the specific surface of the first base improve the hydrophilicity of the specific surface of the first base. As a result, the hydrophilicity of the defining surface of the first base is improved. The gas that is used in the second plasma treatment may contain a gas other than the oxygen gas as long as the gist of the present disclosure is maintained.

The flow rate of the oxygen gas in the second plasma treatment is preferably 1 sccm to 500 sccm, more preferably 10 sccm to 500 sccm, and particularly preferably 50 sccm to 150 sccm.

The pressure in the second plasma treatment is preferably 10 Pa to 300 Pa, more preferably 20 Pa to 200 Pa, and particularly preferably 50 Pa to 150 Pa.

The treatment time in the second plasma treatment is preferably 10 seconds to 500 seconds, more preferably 20 seconds to 300 seconds, and particularly preferably 50 seconds to 150 seconds.

The output in the second plasma treatment is preferably 10 W to 1,000 W, more preferably 15 W to 700 W, and particularly preferably 50 W to 500 W. The output is a radio frequency (RF) output.

The manufacturing method for a microchannel device may include, after the second plasma treatment, subjecting the specific surface of the first base to a plasma treatment (hereinafter, may be referred to as a "third plasma treatment" in this section) in the presence of the ammonia gas. In the third plasma treatment, a functional group such as an -NH3 group is further formed on the specific surface of the first base, on which functional groups such as an -OH group and a -OOH group have been formed through the second plasma treatment. The series of plasma treatments including the first plasma treatment, the second plasma treatment, and the third plasma treatment, improves the hydrophilicity of the specific surface of the first base and the adhesiveness of the first base to the second base in the step (5) described later. The gas that is used in the third plasma treatment may contain a gas other than the ammonia gas as long as the gist of the present disclosure is maintained.

The flow rate of the ammonia gas in the third plasma treatment is preferably 1 sccm to 500 sccm, more preferably 10 sccm to 300 sccm, and particularly preferably 50 sccm to 150 sccm.

The pressure in the third plasma treatment is preferably 10 Pa to 300 Pa, more preferably 20 Pa to 200 Pa, and particularly preferably 50 Pa to 150 Pa.

The treatment time in the third plasma treatment is preferably 30 seconds to 700 seconds, more preferably 50 seconds to 500 seconds, and particularly preferably 100 seconds to 300 seconds.

The output in the third plasma treatment is preferably 10 W to 1,000 W, more preferably 20 W to 500 W, and particularly preferably 50 W to 150 W. The output is a radio frequency (RF) output.

[Step (3)]

In the step (3), a second base having a surface for being in contact with the first base is prepared, where the second base has solvent resistance. Hereinafter, a surface of the second base, which is for coming into contact with the first base, may be referred to as a "specific surface of the second base".

Examples of the component of the second base include the component described in the section of "Second base (second base)" described above. The preferred component of the second base is the same as the preferred component of the second base, which is described in the section of "Second base (second base)" described above.

The specific surface of the second base is subjected to a plasma treatment in the step (4) described later and then is brought into contact with the first base in the step (5) described later. A groove may be formed on the specific surface of the second base. The shape of the groove is not limited. Examples of the cross-sectional shape of the groove include a quadrangular shape and a semi-circular shape. Examples of the method for forming the groove include a method using a mold produced by photolithography described in the section of "Step (1)" described above.

The shape of the second base is not limited. From the viewpoint of ease of manufacture, the shape of the second base is preferably a flat plate. For example, the flat plate-shaped second base has a first main surface and a second main surface on a side opposite to the first main surface. In the flat plate-shaped second base, the specific surface of the second base may be the first main surface or the second main surface.

[Step (4)]

In the step (4), the specific surface of the second base is subjected to a plasma treatment (hereinafter, may be referred to as a "first plasma treatment" in this section) in the presence of the ammonia gas. In the step (4), a portion that comes into contact with a composition containing a surfactant described later may be also subjected to a plasma treatment. The preferred conditions for the first plasma treatment are the same as the preferred conditions for the first plasma treatment described in the section of "Step (2)" described above.

The manufacturing method for a microchannel device may include, after the first plasma treatment, subjecting the specific surface of the second base to a plasma treatment (hereinafter, may be referred to as a "second plasma treatment" in this section) in the presence of the oxygen gas. The preferred conditions for the second plasma treatment are the same as the preferred conditions for the second plasma treatment described in the section of "Step (2)" described above.

The manufacturing method for a microchannel device may include, after the second plasma treatment, subjecting the specific surface of the second base to a plasma treatment (hereinafter, may be referred to as a "third plasma treatment" in this section) in the presence of the ammonia gas. The preferred conditions for the second plasma treatment are the same as the preferred conditions for the second plasma treatment described in the section of "Step (2)" described above.

It is preferable that the step (4) and the step (2) are carried out at the same time. That is, in the step (4), it is preferable that the specific surface of the first base and the specific surface of the second base are subjected the plasma treatment at the same time. In a case of carrying out the step (2) and the step (4) at the same time, the time taken from the end of the step (2) and the step (4) to the start of the step (5) is shortened, and in the step (5) described later, the adhesiveness between the first base and the second base is improved. The step (2) and the step (4) may be carried out at the same time in, for example, one plasma treatment apparatus.

[Step (5)]

In the step (5), the specific surface of the second base, which has been subjected to the plasma treatment, is brought into contact with the specific surface of the first base, which has been subjected to the plasma treatment, to form a flow channel defined by the first base and the second base. After the plasma treatment, the second base is brought into contact with the first base, whereby the second base is adhered to the first base. In the step (5), the groove of the first base is covered with the second base, whereby a space (that is, a flow channel) surrounded by the surface of the first base and the surface of the second base is formed.

From the viewpoint of improving the bondability, the time taken from the end of the plasma treatment to the bringing of the specific surface of the second base, subjected to the plasma treatment, into contact with the specific surface of the first base, subjected to the plasma treatment, (hereinafter, referred to as a "waiting time" in the present paragraph) is preferably 0.5 minutes to 10 minutes, more preferably 0.5 minutes to 8 minutes, and preferably 0.5 minutes to 5 minutes. In a case where the manufacturing method for a microchannel device includes a plurality of plasma treatments which are carried out at different timing, the waiting time is counted from the end of the last plasma treatment.

From the viewpoint of improving the bondability, it is preferable that in the step (5), a load is applied to the first base and the second base after the specific surface of the second base is brought into contact with the specific surface of the first base. The load may be determined depending on, for example, the component of the base. The load is preferably 50 g/cm$^2$ to 500 g/cm$^2$ and more preferably 80 g/cm$^2$ to 300 g/cm$^2$. From the viewpoint of improving the bondability, it is more preferable that in the step (5), after the specific surface of the second base is brought into contact with the specific surface of the first base under a temperature condition described later, a load is applied to the first base and the second base.

From the viewpoint of improving the bondability, in the step (5), the first base and the second base may be heated after the specific surface of the second base is brought into contact with the specific surface of the first base. The temperature may be determined depending on, for example, the component of the base. The temperature is preferably 50°C to 300°C, more preferably 80°C to 300°C, and particularly preferably 120°C to 300°C. The temperature in a heating method using a non-contact heating device indicates the ambient temperature. The temperature in a heating method using a contact heating device indicates the temperature of an article that comes into direct contact with the base.

[Step (6)]

The manufacturing method for a microchannel device used in the present disclosure may include causing a composition containing a surfactant to flow into the flow channel formed through the step (5) described above. In a case of causing a composition containing a surfactant to flow into the flow channel, it is possible to adsorb a surfactant to a portion of the solid surface that defines the flow channel (that is, the defining surface of the first base and the defining surface of the second base), where the portion comes into contact with the composition.

Examples of the surfactant used in the manufacture of the microchannel device used in the present disclosure include the surfactant described in the section of "first base". The preferred kind of the surfactant is the same as the preferred kind of the surfactant described in the section of "First base" described above. The composition may contain two or more kinds of surfactants.

The content of the surfactant in the composition is preferably 0.1% by mass to 20% by mass, more preferably 0.5% by mass to 15% by mass, and particularly preferably 2% by mass to 8% by mass, with respect to the total mass of the composition.

The composition containing a surfactant is produced, for example, by mixing a surfactant and a solvent. The solvent is preferably a solvent that does not dissolve the first base and the second base. The solvent is preferably water.

The method of causing the composition to flow into the flow channel is not limited. The composition may be caused to flow into the flow channel by, for example, a method using a liquid feeding pump or an immersion method. The liquid feeding pump is as described in the section of "Production of liquid droplet" described above. In the immersion method, the first base and the second base bonded to each other in the step (5) are immersed in a composition, to cause a composition containing a surfactant to flow through the flow channel by a capillary force.

In a method using a liquid feeding means such as a liquid feeding pump, the flow rate of the composition is preferably 0.1 mm/sec to 1,000 mm/sec, more preferably 0.5 mm/sec to 500 mm/sec, and particularly preferably 1 mm/sec to 100 mm/sec. In a case where the flow rate of the composition is 0.1 mm/sec or more, the uniformity of the hydrophilization treatment is improved. In a case where the flow rate of the composition is 1,000 mm/sec or less, the adsorptivity of the surfactant to the first base and the second base is improved.

The flow time of the composition is preferably 0.5 minutes to 120 minutes, more preferably 1 minute to 60 minutes, and particularly preferably 2 minutes to 30 minutes. In the immersion method, the flow time is indicated by the immersion time.

The amount of the surfactant adsorbed on the solid surface that defines the flow channel is adjusted, for example, by the content of the surfactant in the composition, the flow rate of the composition, or the flow time of the composition.

The step (6) may be carried out a plurality of times. For example, in a case where the step (6) is carried out a plurality of times, the step (5) may be further carried out after the n-th step (6) and before the n + 1-th step (6). Further, after the step (6), the step (5) may be further carried out. In a case where the step (5) is further carried out at such timing as described above, the bondability is improved. It is preferable that the step (5) carried out at such timing as described above is carried out under a condition of pressurization or heating, or both conditions of pressurization and heating. The heating condition and the pressurizing condition in the step (5) are as described in the section of "Step (5)" described above.

In the step (6), in order to introduce a composition into the flow channel, an opening portion that is connected to the flow channel may be formed in the microchannel device, as necessary. In the step prior to the step (6), the opening portion may be formed in the first base or the second base.

(Meat substitute)

It is preferable that the meat substitute according to the present disclosure includes edible oil-encapsulating microcapsules according to the first embodiment, the second embodiment, or the third embodiment.

The method of incorporating the edible oil-encapsulating microcapsules according to the first embodiment, the second embodiment, or the third embodiment into the meat substitute is not particularly limited, and a known method can be used. Examples thereof include a method of injecting microcapsules into the meat substitute using a syringe or the like.

The meat substitute is not particularly limited, and examples thereof include edible cultured meat and plant-based meat, but the plant-based meat is suitably used.

In the present specification, the plant-based meat means pseudo meat (artificial meat) in which a raw material derived from a plant is used as a main raw material. In addition, in the present specification, the main raw material means a raw material that occupies 50% by mass or more of the raw materials used.

Examples of the raw material derived from a plant include plant proteins derived from mushrooms, grains, soybeans, and the like.

The content of the above-described edible oil-encapsulating microcapsules is preferably 0.1% by mass to 50% by mass, and more preferably 1% to 30% with respect to the total mass of the meat substitute.

The meat substitute according to the present disclosure may further contain components other than the edible oil-encapsulating microcapsules according to the first embodiment, the second embodiment, or the third embodiment. Examples of the components other than the edible oil-encapsulating microcapsule include stabilizers and fragrances.

Examples

Hereinafter, the present disclosure will be described more specifically with reference to Examples, but the present disclosure is not limited to the following Examples as long as the gist of the present disclosure is not exceeded. Unless otherwise specified, "parts" and "%" are based on mass.

(Comparative Example 1)

First, an outer oil phase, a water phase, an inner oil phase, and a hydrogenated oil were prepared by the following procedure.

-Outer oil phase-

99% by mass of corn oil (manufactured by Fujifilm Wako Pure Chemical Corporation) and 1% by mass of SY-Glyster CRS-75 (manufactured by Sakamoto Yakuhin Kogyo Co., Ltd.) as a surfactant were mixed well and used.

-Water phase-

98% by mass of pure water and 1% by mass of sodium alginate (manufactured by Fujifilm Wako Pure Chemical Corporation) were mixed well to prepare a sodium alginate aqueous solution having a concentration of 1% by mass.

-Inner oil phase-

Corn oil (manufactured by Fujifilm Wako Pure Chemical Corporation) was used.

In the evaluation of the inclusion property, 0.01% by mass of a red dye was added to the inner oil phase for coloring, and the mixture was mixed well and used.

-Hydrogenated oil-

98.9% by mass of pure water and 1.11% by mass of calcium chloride were mixed well to prepare a 100 mM calcium chloride aqueous solution, which was used as a hydrogenated oil.

<<Production of microchannel device>>

Next, a microchannel device for forming uniform liquid droplets was produced.

Production method: a microchannel device was produced according to the following procedure. The microchannel device includes a base (a first base) and a facing base (a second base) that comes into contact with the base (see, for example, Fig. 1).

[Step 1: Preparation of photo mask]

A photo mask (System Advance Co., Ltd.) including a blue plate glass and a patterned chromium thin film was prepared. One surface of the blue plate glass (hereinafter, referred to as a "first surface") is covered with a patterned chromium thin film. A region of the first surface of the blue plate glass, which is covered with the patterned chromium thin film, forms a light shielding part of the photo mask. A region of the first surface of the blue plate glass, which is not covered with the patterned chromium thin film, forms a transmissive part of the photo mask. The photo mask includes a T-shaped transmissive part. The line width of the T-shaped transmissive part is 300 μm.

[Step 2: Production of mold]

A 4-inch (1 inch is 25.40 mm) silicon wafer (ELECTRONICS AND MATERIALS CORPORATION LIMITED) was washed with acetone and ethanol. The washed silicon wafer was dried at 100°C for 10 minutes using a hot plate (HP-1SA, AS ONE Corporation). The dried silicon wafer was placed on a spin coater (MS-A150, Mikasa Co., Ltd.) by suction. 5 mL of "SU-8 3050" (KAYAKU Advanced Materials, Inc.) was added dropwise onto the silicon wafer. "SU-8 3050" is a negative tone photoresist. After removing air bubbles in the "SU-8 3050" added dropwise onto the silicon wafer, the silicon wafer was rotated at a rotation speed of 1300 for 30 seconds. The silicon wafer covered with a thin film of "SU-8 3050" was subjected to prebaking at 65°C for 5 minutes and at 95°C for 40 minutes, and then the silicon wafer was cooled to room temperature. This work was repeated twice.

Then, the silicon wafer was placed on a mask aligner by suction. A chromium thin film of the photo mask was brought into contact with the thin film of "SU-8 3050", formed on the silicon wafer, and the thin film of "SU-8 3050" was irradiated with ultraviolet rays of 8.0 $mW/cm^2$ (wavelength: 365 nm) for 25 seconds. The silicon wafer was subjected to baking at 65°C for 1 minute and then at 95°C for 15 minutes, and then the silicon wafer was cooled to room temperature. The silicon wafer and 10 mL of "SU-8 developer" (KAYAKU Advanced Materials, Inc.) were placed in a glass petri dish having a diameter of 120 mm and then subjected to development for 10 minutes by using a shaker (NR-10, TAITEC CORPORATION). "SU-8 3050" and "SU-8 developer", remaining on the silicon wafer, were washed with isopropyl alcohol (manufactured by Fujifilm Wako Pure Chemical Corporation). The silicon wafer was subjected to hard baking at 150°C for 20 minutes by using a hot plate. A mold was obtained according to the above procedure. The mold includes the silicon wafer and a pattern formed on the silicon wafer by using the photoresist.

[Step 3: Production of first base]

The mold was washed with acetone and ethanol and then dried at 100°C for 10 minutes by using a hot plate. A composition obtained by mixing a main agent of "Sylgard 184" (DuPont Toray Specialty Materials K.K.) and a curing agent at a ratio of 10:1 (in terms of mass ratio) was placed on the mold placed in the glass petri dish. After degassing, the composition was cured by heating at 90°C for 1 hour by using a hot plate. The cured substance was peeled from the mold to obtain a first base containing polydimethyl siloxane (PDMS). A groove is formed on the surface of the first base exposed by the peeling. The shape of the groove formed in the first base corresponds to the shape of the pattern of the mold. The depth of the groove measured with a laser optical microscope (VK8550, Keyence Corporation) was about 200 μm. Using a biopsy trephine having a diameter of 1.5 mm (Kai Corporation), three opening portions (that is, holes) were formed in the first base of the microchannel device. Each opening portion is then connected to the end of a T-shaped flow channel.

[Step 4: Plasma treatment]

A plate made of polydimethyl siloxane (PDMS) was prepared as a second base. The first base and the second base were placed in a chamber of a tabletop etcher (14-147, Universal Technics Co., Ltd.). The pressure in the chamber was adjusted to 50 Pa, an argon gas (Ar) 100 sccm of and an oxygen gas ($O_2$) 20 sccm of were allowed to flow into the chamber, and plasma treatment was carried out for 20 seconds at a radio frequency (RF) output of 20 W. The treatment target surface of the first base is a surface on which the groove is formed. The treatment target surface of the second base is one surface of the second base (that is, the surface of the second base, which comes into contact with the first base in the step 5 described later).

[Step 5: Bonding]

Immediately after the plasma treatment, the plasma-treated surface of the second base was brought into contact with the plasma-treated surface of the first base (that is, the surface on which the groove of the first base is formed) to bond the first base to the second base.

After that, by heating in an oven at 100°C for 1 hour, the surface of the flow channel was returned to be hydrophobic, and the microchannel device was completed. Fig. 7 shows a schematic diagram of a flow channel of the microchannel device. In Fig. 7, 60, 62, and 64 each represent the flow channel, 52A represents the junction, and 50, 52, and 54 each represent the opening portion.

<<Preparation of oil droplet-encapsulating water phase>>

Next, 3 parts by mass of the inner oil phase and 10 parts by mass of the water phase were weighed, placed in a glass vial together with a magnetic stirrer, and stirred at 1000 rpm for 3 minutes to prepare an oil droplet-encapsulating water phase.

Subsequently, using a syringe pump (PHD2000, manufactured by HARVARD), outer oil phase and oil droplet-encapsulating water phase were allowed flow into the tube connected to respective ends of the microchannel device at the following flow rate (mL/hr) and time (min), respectively.

Outer oil phase: 2 cc (mL)/hr (30 min)

Oil droplet-encapsulating water phase: 0.5 cc (mL)/hr (30 min)

The recovery liquid was added dropwise into a vial containing 10 cc (mL) of the hydrogenated oil from the tube of the recovery port, and then the mixture was allowed to stand at room temperature (25°C) for one day.

When the glass vial was checked, red coloring was confirmed in the recovered liquid. At this time, since the oil phase was colored red, it was confirmed that the inner oil phase was filtered out during capsule formation, and the inclusion property evaluation was B.

Then, after adding 10 parts by mass of pure water to the glass vial, only the water phase was separated using a separation funnel, and then washing with pure water was performed 5 times to obtain a water dispersion of edible oil-encapsulating microcapsules.

The obtained edible oil-encapsulating microcapsules had an average particle diameter of 218 μm and a coefficient of variation of 36%.

In addition, in a case where the recovery liquid was checked by a transmission optical microscope, coarse particles having a size of 300 μm or more were often observed.

The average particle diameter and the coefficient of variation were obtained by the calculation method mentioned later. Details of the obtained edible oil-encapsulating microcapsules are shown in Table 1.

(Example 1)

An outer oil phase, a water phase, an inner oil phase, and a hydrogenated oil were prepared by the following procedure.

-Outer oil phase-

99% by mass of corn oil (manufactured by Fujifilm Wako Pure Chemical Corporation) and 1% by mass of SY-Glyster CRS-75 (manufactured by Sakamoto Yakuhin Kogyo Co., Ltd.) as a surfactant were mixed well and used.

-Water phase-

(1) 98% by mass of pure water and 2% by mass of sodium alginate (manufactured by Fujifilm Wako Pure Chemical Corporation) were mixed well to prepare a sodium alginate aqueous solution having a concentration of 2% by mass.
(2) 98.9% by mass of pure water and 1.11% by mass of calcium chloride (manufactured by Fujifilm Wako Pure Chemical Corporation) were mixed well to prepare a 100 mM (mol/L) calcium chloride aqueous solution.
(3) 50% by mass of EDTA 2Na solution (0.1 mol/L) (manufactured by Dojin Chemical Laboratory Co., Ltd.) and 50% by mass of a 100 mM calcium chloride aqueous solution prepared in (2) above were mixed well, and pH of the mixture was adjusted to pH 7.3 using a 2N (mol/L) sodium hydroxide aqueous solution to prepare a pH-adjusted EDTA-CaCh mixed aqueous solution. For the pH adjustment, pH METER D-51, manufactured by HORIBA, Ltd. was used.
(4) 50% by mass of the sodium alginate aqueous solution having a concentration of 2% by mass and 50% by mass of a pH-adjusted EDTA-CaCh mixed aqueous solution were mixed well to prepare a water phase.

The pH of the water phase at this time was 7.4.

-Inner oil phase-

Corn oil (manufactured by Fujifilm Wako Pure Chemical Corporation) was used.
In order to evaluate the inclusion property of the food oil-encapsulating microcapsules, 0.01% by mass of a red dye was added to the inner oil phase for coloring, and the mixture was mixed well to prepare an inner oil phase.

-Hydrogenated oil-

99% by mass of corn oil (manufactured by Fujifilm Wako Pure Chemical Corporation) and 1% by mass of acetic acid (manufactured by Fujifilm Wako Pure Chemical Corporation) as a pH lowering agent were mixed well to prepare the acetic acid-containing corn oil having a concentration of 1% by mass as hydrogenated oil.
In addition, a microchannel device was prepared by the same procedure as in Comparative Example 1.
Next, 3 parts by mass of the inner oil phase and 10 parts by mass of the water phase were weighed, placed in a glass vial together with a magnetic stirrer, and stirred at 1000 rpm for 3 minutes to prepare an oil droplet-encapsulating water phase (step A).
Next, using a syringe pump (PHD2000, manufactured by HARVARD), the outer oil phase and the oil droplet-encapsulating water phase was allowed flow into the tubes connected to the respective ends of the microchannel device at the following flow rate (mL/hr) and time (min) respectively to obtain an oil-in-water-in-oil droplet dispersion liquid (step B).

Outer oil phase: 2 cc (mL)/hr (30 min)
Oil droplet-encapsulating water phase: 0.5 cc (mL)/hr (30 min)

After adding dropwise the recovery liquid into a vial containing 10 cc (mL) of the hydrogenated oil from the tube of the recovery port (Step C), 20 parts by mass of pure water was added, and then the mixture was allowed to stand at room temperature (25°C) for one day.
At this time, since the recoverey liquid (oil phase) in the glass vial was not colored red, it was confirmed that the inner oil phase had not been filtered out during capsule formation, and the inclusion property evaluation was A according to the evaluation criteria mentioned later.
Then, only the water phase was separated using a separation funnel, and then washing with pure water was performed 5 times, and pure water was added thereto to obtain a water dispersion of edible oil-encapsulating microcapsules.
The obtained edible oil-encapsulating microcapsules had an average particle diameter of 216 μm and a coefficient of variation of 12%. The average particle diameter and the coefficient of variation were obtained by the calculation method mentioned later. Details of the obtained edible oil-encapsulating microcapsules are shown in Table 1.
The obtained water dispersion of the edible oil-encapsulating microcapsules was filtered using a nylon mesh (manufactured by AS ONE CORPORATION, with a mesh size of 15 μm), and the edible oil-encapsulating microcapsules were recovered. The content of the metal chelating agent (EDTA) contained in the recovered edible oil-encapsulating microcapsules was calculated in accordance with "Standard methods of analysis in food regulation-Food additives, 2003, supervised by Ministry of Health, Labour and Welfare" (the procedure of separating the chelate-type EDTA and the free-type EDTA was omitted). The content of the metal chelating agent was 25 ppm with respect to the total mass of the edible oil-encapsulating microcapsules.

(Example 2)

An outer oil phase, a water phase, an inner oil phase, and a hydrogenated oil were prepared by the same procedure as in Example 1.

In addition, a microchannel device was prepared by the same procedure as in Comparative Example 1. At this time, unlike Comparative Example 1, a device having a flow channel with two T-shaped intersections (junctions) (see Fig. 8) was produced (step A). Fig. 8 is a schematic diagram showing a flow channel of the microchannel device, where 60, 62, 64, and 66 each represent the flow channel, 52A and 56A each represent the junction, and 50, 52, 54, and 56 each represent the opening portion.

Next, 3 parts by mass of the inner oil phase and 10 parts by mass of the water phase were weighed, placed in a glass vial together with a magnetic stirrer, and stirred at 1000 rpm for 3 minutes to prepare an oil droplet-encapsulating water phase.

Subsequently, using a syringe pump (PHD2000, manufactured by HARVARD), outer oil phase, oil droplet-encapsulating water phase, and hydrogenated phase were allowed flow into the tube connected to the respective ends of the microchannel device at the following flow rate mL/hr) and time (min), respectively (step B and C).

Outer oil phase: 2 cc (mL)/hr (30 min)

Oil droplet-encapsulating water phase: 0.5 cc (mL)/hr (30 min)

Hydrogenated phase (hydrogenated oil): 1 cc (mL)/hr (30 min)

After adding dropwise the recovery liquid into a glass vial from the tube of the recovery port, 20 parts by mass of pure water was added thereto, and then the mixture was allowed to stand at room temperature (25°C) for one day.

Then, only the water phase was separated using a separation funnel, and then washing with pure water was performed 5 times to obtain a water dispersion of edible oil-encapsulating microcapsules.

The obtained edible oil-encapsulating microcapsules had an average particle diameter of 196 μm and a coefficient of variation of 5%. The average particle diameter and the coefficient of variation were obtained by the calculation method mentioned later. Details of the obtained edible oil-encapsulating microcapsules are shown in Table 1.

(Example 3)

First, an outer oil phase, a water phase, an inner oil phase, and a hydrogenated oil were prepared by the same procedure as in Example 1.

In addition, a microchannel device was prepared by the same procedure as in Example 2. At this time, one device with one T-shaped intersection (junction) in which the width and height of the microchannels are 100 μm (see Fig. 9) and one device with two T-shaped intersections (junctions) in which the width height of the microchannels is 200 μm (see Fig. 8) were produced.

In Fig. 9, 60, 64, and 68 each represent the flow channel, 58A represents the junction, and 50, 54, and 58 each represent the opening portion.

For the device with one T-shaped intersection (junction), in the production of the microchannel device of Comparative Example 1, the following in-channel hydrophilization treatment was performed immediately after the bonding step (step 5).

<<Hydrophilization treatment>>

A tetrafluoroethylene-perfluoroalkylvinyl ether (PFA) tube (outer diameter: 1/16 "inch, inner diameter: 0.5 mm) was inserted into each opening portion. After 1 minute from the end of the plasma treatment, pure water containing 5% by mass of "Pluronic F127" (Merck KGaA) (hereinafter, referred to as a "treatment liquid (1) ") was allowed to flow at a flow rate of 3 mL/hour for 5 minutes by using a syringe pump (PHD4400, manufactured by HARVARD Apparatus). By allowing the treatment liquid (1) to flow into the flow channel, the surface of the first base and the surface of the second base that faces the inside of the flow channel were subjected to the hydrophilization treatment. Finally, the inside of the flow channel of the microchannel device was washed by allowing acetone and ethanol to flow thereinto.

[Preparation of oil droplet-encapsulating water phase]

Next, using a syringe pump (PHD2000, manufactured by HARVARD), water phase and inner oil phase were at first allowed flow into the tube connected to the respective ends of the device with one hydrophilized T-shaped intersections (junctions) at the following flow rate (mL/hr) and time (hr), respectively (step A).

Water phase: 1cc (mL)/hr (1 hr)

Inner oil phase: 0.2 cc (mL)/hr (1 hr)

Then, the recovery liquid (oil droplet-encapsulating water phase) was recovered in a glass vial from the tube of the recovery port.

[Preparation of edible oil-encapsulating microcapsules using microchannel device]

Next, using a syringe pump (PHD2000, manufactured by HARVARD), outer oil phase, oil droplet-encapsulating water phase, and hydrogenated phase were allowed flow into the tube connected to the respective ends of the device with two T-shaped intersections (junctions) at the following flow rate (mL/hr) and time (min), respectively (step B and C).

Outer oil phase: 2 cc (mL)/hr (30 min)
Oil droplet-encapsulating water phase prepared above: 0.5 cc (mL)/hr (30 min)
Hydrogenated phase (hydrogenated oil): 1 cc (mL)/hr (30 min)

After adding dropwise the recovery liquid into a glass vial from the tube of the recovery port, 20 parts by mass of pure water was added thereto, and then the mixture was allowed to stand at room temperature (25°C) for one day.
Then, only the water phase was separated by a separation funnel, and then washing with pure water was performed 5 times to obtain a water dispersion of edible oil-encapsulating microcapsules.
The obtained edible oil-encapsulating microcapsules had an average particle diameter of 213 μm as an outer diameter, and a coefficient of variation of 5%.
The inner oil phase of the edible oil-encapsulating microcapsules had an average particle diameter of 88 μm and a coefficient of variation of 6%.
In addition, in most of the edible oil-encapsulating microcapsules, the number of encapsulated oil droplets was 1, and the average thickness of the outer skin (shell portion) was 64 μm.
The average particle diameter and the coefficient of variation were obtained by the calculation method mentioned later. Details of the obtained edible oil-encapsulating microcapsules are shown in Table 1.

(Example 4)

The edible oil-encapsulating microcapsules were formed in the same manner as in Example 3 except that in Example 3, the flow rate conditions when producing the oil droplet-encapsulating water phase in Step A were changed as follows.

Water phase: 0.5 cc (mL)/hr(1 hr)

Inner oil phase: 0.2 cc (mL)/hr (1 hr)

The edible oil-encapsulating microcapsules had an average particle diameter of 210 μm as an outer diameter, and a coefficient of variation of 7%.
The inner oil phase of the edible oil-encapsulating microcapsules had an average particle diameter of 137 μm and a coefficient of variation of 5%.
In addition, in most of the edible oil-encapsulating microcapsules, the number of encapsulated oil droplets was 1, and the average thickness of the outer skin (shell portion) was 34 μm.
The average particle diameter and the coefficient of variation were obtained by the calculation method mentioned later. Details of the obtained edible oil-encapsulating microcapsules are shown in Table 1.

(Example 5)

The edible oil-encapsulating microcapsules were formed in the same manner as in Example 3 except that in Example 3, a microchannel width and height of the microchannel device with one T-shaped intersection (junction) used each set to 50 μm, and the flow rate conditions when producing the oil droplet-encapsulating water phase in Step A were changed as follows.

Water phase: 0.8 cc (mL)/hr(1 hr)

Inner oil phase: 0.2 cc (mL)/hr (1 hr)

The obtained edible oil-encapsulating microcapsules had an average particle diameter of 203 μm as an outer diameter, and a coefficient of variation of 6%.

The inner oil phase of the edible oil-encapsulating microcapsules had an average particle diameter of 48 μm and a coefficient of variation of 5%.

In addition, in most of the edible oil-encapsulating microcapsules, the number of encapsulated oil droplets was plurality, and the average thickness of the outer skin (shell portion) was 56 μm.

The average particle diameter and the coefficient of variation were obtained by the calculation method mentioned later. Details of the obtained edible oil-encapsulating microcapsules are shown in Table 1.

(Example 6)

An edible oil-encapsulating microcapsules were formed in the same manner as in Example 3 except for the difference that the following inner water phase-encapsulating oil phase was used instead of the inner oil phase in Example 3.

[Preparation of inner water phase-encapsulating inner oil phase]

-Inner oil phase-

99% by mass of corn oil (manufactured by Fujifilm Wako Pure Chemical Corporation) and 1% by mass of SY Glyster CRS-75 (manufactured by Sakamoto Yakuhin Kogyo Co., Ltd.) as a surfactant were mixed well and used.

-Inner water phase-

Pure water was used.

-Micro device-

In advance, a microchannel device with one T-shaped intersection (junction) having a channel width and height of 50 μm of the microchannel was produced. The inside of the microchannel is in a hydrophobic state.

Fig. 10 represents a schematic diagram of the flow channel of the microchannel device, 60, 61, and 64 in Fig. 10 each represent the flow channel, 51A represents a junction, and 50, 51, and 54 each represent an opening portion.

Here, the inner oil phase and the inner water phase are allowed to flow into the opening portion (50 or 51) shown in Fig. 10 at a flow rate and time under the following conditions, respectively, and inner water phase-encapsulating inner oil phase was recovered from a recovery port (54 in Fig. 10). The inner water phase-encapsulating inner oil phase was used in the same manner as the inner oil phase of Example 3 to form edible oil-encapsulating microcapsules.

Inner oil phase: 0.3 cc (mL)/hr (1 hr)

Inner water phase: 0.1 cc (mL)/hr (1 hr)

Details of the obtained edible oil-encapsulating microcapsules are shown in Table 1.

(Example 7 to Example 13)

Microcapsules were prepared in the same manner as in Example 3 except that the encapsulated oil material and the outer skin material shown in Table 1 were used in Examples 7 to 13.

Details of the obtained edible oil-encapsulating microcapsules are shown in Table 1.

(Example 14)

An outer oil phase, a water phase, an inner oil phase, and a hydrogenated oil were prepared by the same procedure as in Example 1.

Next, an oil droplet-encapsulating water phase was prepared by the same procedure as in Example 1. Next, 20 mL of the outer oil phase was put into a glass vial together with a magnetic stirrer, and while stirring at 200 rpm, an Shirasu Porous Glass (SPG) membrane emulsification connector ((for direct type/SPG direct membrane emulsification) hydrophobic treatment, 50 μm, DC50U, manufactured by AS ONE CORPORATION) was used, and liquid was fed using a syringe pump (PHD2000, manufactured by HARVARD) at a flow rate of 5 mL/min, liquid droplets of the oil droplet-encapsulating water phase were formed for 30 minutes, and then 10 mL of hydrogenated oil was added thereto, and stirred at 200 rpm for 1 hour. After the stirring was stopped, 20 parts by mass of pure water was added thereto, and the mixture was allowed to stand at room temperature (25°C) for one day. Then, only the water phase was separated using a separation funnel, and then washing with pure water was performed 5 times, and pure water was added thereto to obtain a water dispersion of edible oil-encapsulating microcapsules.

The obtained edible oil-encapsulating microcapsules had an average particle diameter of 205 μm and a coefficient of variation of 25%. Details of the obtained edible oil-encapsulating microcapsules are shown in Table 1.

[Evaluation]

<Inclusion property evaluation>

The presence or absence of outflow of the colored inner oil phase during the formation of the microcapsules was visually confirmed, and the inclusion properties were evaluated according to the following evaluation criteria.

In a case where no outflow of the inner oil phase is observed from the microcapsules, it can be said that the edible oil-encapsulating microcapsules are formed.

-Evaluation criteria-

The outflow of the inner oil phase cannot be confirmed from the microcapsules ... A
An outflow of the inner oil phase was confirmed from the microcapsules ... B

<Number average particle diameter/coefficient of variation of microcapsules and encapsulated oil>

The recovered edible oil-encapsulating microcapsules were placed in a 60 mmΦ polystyrene chalet not to overlap in the depth direction of the chalet, and imaged by using a transmission optical microscope (manufactured by Carl Zeiss AG, product name: inverted microscope Axio Observer. Z1) with a 5× magnification objective. The equivalent circle diameters of the edible oil-encapsulating microcapsules or encapsulated oil is calculated from 200 or more imaged edible oil-encapsulating microcapsule images by ImageJ, and the number average particle diameter was obtained from the arithmetic mean value (number average) of the obtained equivalent circle diameters.

The coefficient of variation was calculated from the following expression using the obtained number average particle diameter.

In addition, in a case where the coefficient of variation of the number average particle diameter of the edible oil-encapsulating microcapsules is 30% or less, it can be said that the reduction of the granular feeling is excellent.

$$\text{Coefficient of variation (\%)} = \frac{\text{Standard deviation of number average particle diameter}}{\text{Number average particle diameter}} \times 100$$

<Determination of presence/absence of coarse particles>

In the above-mentioned observation with the transmission optical microscope, in 10 fields randomly imaged, a particle diameter of 300 μm or more was regarded as a coarse particle, and the determination was made according to the following evaluation criteria.

In a case where the number of coarse particles is 0, it can be said that the obtained edible oil-encapsulating microcapsules are excellent in reducing the granular feeling. On the other hand, even if the detection frequency of the coarse particles is low, in a case of being injected into the meat substitute (plant-based meat), the coarse particles have a great influence on the appearance and the granular feeling of the texture of the meat substitute.

-Evaluation criteria-

In a case where one or more coarse particles are confirmed ... "Presence"
In the case of 0 coarse particles ... "Absence"

<Average outer skin thickness/coefficient of variation of outer skin thickness>

In the particle image of the edible oil-encapsulating microcapsules obtained by the observation with a transmission optical microscope mentioned above, in a case where A is the total area of the encapsulated oil droplets and R is the particle diameter of the edible oil-encapsulating microcapsules, the outer skin thickness (thickness of the shell portion) of the encapsulated oil droplets was calculated from the following expression in terms of one oil droplet.

$$\text{Outer skin thickness } [\mu m] = \frac{R - 2 \times \sqrt{A/\pi}}{2}$$

100 of the outer skin thicknesses calculated above were measured, and the coefficient of variation of the average outer skin thickness was calculated by the following expression, with the arithmetic mean value of the outer skin thickness as the average outer skin thickness.

$$\text{Coefficient of variation (\%)} = \frac{\text{Standard deviation of outer skin thickness}}{\text{Average outer skin thickness}} \times 100$$

[Table 1]

| Example | Edible oil-encapsulating microcapsules | | | | | | | | | Evaluation | |
|---|---|---|---|---|---|---|---|---|---|---|---|
| | Core portion (encapsulated oil) | | | | Shell portion (outer skin) | | | | | | |
| | Encapsulated oil material | Number average particle diameter of encapsulated oil | Coefficient of variation of number average particle diameter of encapsulated oil | Water droplet in encapsulated oil | Outer skin material | Average outer skin thickness | Coefficient of variation of average outer skin thickness | Number average particle diameter of microcapsules | Coefficient of variation of number average particle diameter of microcapsules | Coarse particles | Inclusion property |
| | | μm | % | Presence /absence | | μm | % | μm | % | Presence /absence | |
| Comparative Example 1 | Com oil | 18 | 52 | Presence | Na alginate | 63 | 37 | 218 | 36 | Presence | B |
| Example 1 | Com oil | 25 | 45 | Absence | Na alginate | 84 | 19 | 216 | 12 | Absence | A |
| Example 2 | Com oil | 25 | 45 | Absence | Na alginate | 83 | 13 | 196 | 5 | Absence | A |
| Example 3 | Com oil | 88 | 6 | Absence | Na alginate | 64 | 8 | 213 | 5 | Absence | A |
| Example 4 | Com oil | 137 | 5 | Absence | Na alginate | 34 | 10 | 210 | 7 | Absence | A |
| Example 5 | Com oil | 48 | 5 | Absence | Na alginate | 56 | 12 | 203 | 6 | Absence | A |
| Example 6 | Com oil | 90 | 8 | Absence | Na alginate | 62 | 12 | 205 | 8 | Absence | A |
| Example 7 | Com oil | 89 | 6 | Absence | Pectin | 68 | 8 | 218 | 5 | Absence | A |
| Example 8 | Com oil | 88 | 6 | Absence | PGA | 60 | 9 | 198 | 7 | Absence | A |
| Example 9 | Com oil | 89 | 6 | Absence | Carrageenan | 62 | 9 | 213 | 8 | Absence | A |
| Example 10 | Sunflower oil | 90 | 6 | Absence | Na alginate | 62 | 7 | 210 | 5 | Absence | A |
| Example 11 | Oleic acid | 96 | 8 | Absence | Na alginate | 57 | 10 | 215 | 7 | Absence | A |
| Example 12 | Linseed oil | 93 | 5 | Absence | Na alginate | 63 | 11 | 215 | 5 | Absence | A |
| Example 13 | Oleic acid /linseed oil = 1:1 | 96 | 5 | Absence | Na alginate | 60 | 10 | 210 | 6 | Absence | A |
| Example 14 | Com oil | 25 | 45 | Absence | Na alginate | 78 | 28 | 205 | 25 | Absence | A |

Details of each component described in Table 1 are shown below.

<<Outer skin (shell portion) material>>

- · Pectin: (derived from citrus, manufactured by Fujifilm Wako Pure Chemical Corporation)
- · Polygalacturonic acid (PGA): (manufactured by MP Biomedicals, Inc.)
- · Carrageenan: (x-Carrageenan, manufactured by Fujifilm Wako Pure Chemical Corporation)

«Encapsulated oil»

- · Sunflower oil (mixed fatty acid containing linoleic acid and oleic acid): (manufactured by Fujifilm Wako Pure Chemical Corporation), melting point: -18°C
- · Oleic acid: (manufactured by Fujifilm Wako Pure Chemical Corporation), melting point: 13.4°C
- · Com oil (mixed fatty acid containing linoleic acid, oleic acid, and palmitic acid), melting point: -10 °C.
- · Linseed oil: (manufactured by Fujifilm Wako Pure Chemical Corporation), α-linolenic acid: 56.1%, linoleic acid: 15.2%, oleic acid 18.9%, saturated fatty acid 9.5%, others 0.2%, melting point: -22°C

· Oleic acid/linseed oil = 1:1

A mixed oil obtained by mixing the above-mentioned oleic acid and linseed oil in a ratio of 1: 1 on a mass basis.

(Preparation of meat substitute containing edible oil-encapsulating microcapsules)

The edible oil-encapsulating microcapsules of Examples 1 to 14 obtained above were injected into the meat substitute (containing 10% by mass of plant proteins derived from soybean or the like with respect to the total mass of the meat substitute) in an amount of 10% by mass with respect to the total mass of the meat substitute to obtain a meat substitute containing edible oil-encapsulating microcapsules.

As a result of confirming the presence or absence of elution of the encapsulated oil after heat-treating of the obtained meat substitute at 100°C for 10 minutes, no leakage of the encapsulated oil was confirmed.

From the results shown in Table 1, the edible oil-encapsulating microcapsules and the production method of the edible oil-encapsulating microcapsules of Examples 1 to 14 were excellent in inclusion property and suppression of coarse particles than the edible oil-encapsulating microcapsules and the production method of the edible oil-encapsulating microcapsules of Examples 1 and 2.

<Example 101>

A water dispersion of edible oil-encapsulating microcapsules was obtained by the same procedure as in Example 1.

1 mL of the obtained water dispersion of edible oil-encapsulating microcapsules was added to a glass screw bottle (9cc, manufactured by Maruemu Corporation), immersed in a constant temperature bath (water bath) at 80°C, and heated for 5 minutes to obtain the water dispersion of the edible oil-encapsulating microcapsules after heating (heating step).

The number average particle diameter of the encapsulated oil, the coefficient of variation of the number average particle diameter of the encapsulated oil, the average outer skin thickness, and the outer skin thickness coefficient of variation of the edible oil-encapsulating microcapsules after heating were obtained by the calculation methods described above. The calculation results are shown below.

- · Number average particle diameter of encapsulated oil: 25 μm
- · Coefficient of variation of number average particle diameter of encapsulated oil: 44%
- · Average outer skin thickness: 73 μm
- · Coefficient of variation of outer skin thickness: 16%
- · Number average particle diameter of edible oil-encapsulating microcapsules after heating: 205 μm

<Evaluation of heat resistance>

-Procedure-

Using the water dispersion of the edible oil-encapsulating microcapsules obtained in Example 1 and the water dispersion of the edible oil-encapsulating microcapsules after heating obtained in Example 101, the heat resistance was evaluated according to the following procedure. In this paragraph, the water dispersion of the edible oil-encapsulating microcapsules and the water dispersion of the edible oil-encapsulating microcapsules after heating are referred to as "microcapsule dispersion", and the edible oil-encapsulating microcapsules and the edible oil-encapsulating microcapsules after heating are referred to as "microcapsules".

Only the water phase was separated using a separation funnel from water dispersion of microcapsules, and then washing with pure water was performed twice, and then filtering by using nylon mesh (manufactured by AS ONE CORPORATION, with a mesh size of 15 μm) was performed, and microcapsules were recovered. Com oil was added to the recovered microcapsules to prepare 1 mL of oil dispersion of the microcapsules. The oil dispersion was added to a glass screw bottle (9cc, manufactured by Maruemu Corporation) and immersed in a constant temperature bath (water bath) at 70°C for 30 min. Then, the oil dispersion was visually observed, and it was confirmed whether or not the corn oil was colored by the red dye contained in the encapsulated oil of the microcapsules.

-Evaluation results-

In the oil dispersion containing the edible oil-encapsulating microcapsules after heating obtained in Example 101, the corn oil was not colored. Therefore, it was determined that the encapsulated oil was not eluted out.

On the other hand, in the oil dispersion containing the edible oil-encapsulating microcapsules obtained in Example 1, the corn oil was slightly colored. Therefore, it was determined that the encapsulated oil was eluted out.

From the above results, it can be seen that the edible oil-encapsulating microcapsules after heating obtained in Example 101 have improved heat resistance as compared with the edible oil-encapsulating microcapsules obtained in Example 1.

In the edible oil-encapsulating microcapsules after heating obtained in Example 101, the average outer skin thickness and the coefficient of variation of the outer skin thickness were decreased as compared with the edible oil-encapsulating microcapsules obtained in Example 1. From this, it is presumed that in the edible oil-encapsulating microcapsules after heating obtained in Example 101, thermal cross-linking of alginic acid contained in the shell portion partially proceeded by heating, whereby the film strength was increased, and thus the heat resistance was improved.

The disclosure of JP2020-199129 filed on November 30, 2020 is incorporated in the present specification by reference in its entirety.

All documents, patent applications, and technical standards described in the present specification are herein incorporated by reference to the same extent that individual documents, patent applications, and technical standards have been specifically and individually indicated to be incorporated by reference, respectively.

Explanation of References

10: first base
20: second base
30, 31, 32, 600: flow channel
31a, 32a, 60: first flow channel part
31b, 32b, 61, 62, 68: second flow channel part
31c, 32c, 66: third flow channel part
32d, 64: fourth flow channel part
32e: fifth flow channel part
30A, 30B, 31A, 32A, 32B, 51A, 52A, 56A, 58A: junction
40, 41, 42, 43: opening portion
100: microchannel device
50: opening portion for allowing the outer oil phase to flow in
51: opening portion for allowing the inner oil phase to flow in
52: opening portion for allowing the water phase containing the inner oil phase to flow in
54: opening portion that is a recovery port
56: opening portion for allowing the hydrogenated phase to flow in

58: opening portion for allowing the inner water phase to flow in

## Claims

1. Edible oil-encapsulating microcapsules comprising:

   a core portion containing edible oil or fat having a melting point of 30°C or less; and
   a shell portion encapsulating the core portion and containing an edible and ionically cross-linkable polymer that is cross-linked with a polyvalent cation,
   wherein a number average particle diameter is 10 μm or more and 300 μm or less, and
   a coefficient of variation of the number average particle diameter is 30% or less.

2. Edible oil-encapsulating microcapsules comprising:

   a core portion containing edible oil or fat having a melting point of 30°C or less; and
   a shell portion encapsulating the core portion and containing an edible and ionically cross-linkable polymer that is cross-linked with a polyvalent cation,
   wherein a number average particle diameter is 10 μm or more and 300 μm or less, and
   at least one of the core portion or the shell portion contains a metal chelating agent.

3. The edible oil-encapsulating microcapsules according to claim 1,
   wherein at least one of the core portion or the shell portion contains a metal chelating agent.

4. The edible oil-encapsulating microcapsules according to claim 2 or 3,
   wherein a content of the metal chelating agent is 0.1 ppm to 500 ppm with respect to a total mass of the edible oil-encapsulating microcapsules.

5. The edible oil-encapsulating microcapsules according to any one of claims 1 to 4,
   wherein a content of the edible oil or fat having a melting point of 30°C or less is 50% by mass or more with respect to a total mass of all edible oil or fat contained in the core portion.

6. The edible oil-encapsulating microcapsules according to any one of claims 1 to 5,
   wherein the ionically cross-linkable polymer is an alginate.

7. The edible oil-encapsulating microcapsules according to any one of claims 1 to 6,
   wherein the edible oil or fat having a melting point of 30°C or less contains at least one compound selected from the group consisting of oleic acid, linoleic acid, and α-linolenic acid.

8. The edible oil-encapsulating microcapsules according to any one of claims 1 to 7,
   wherein the edible oil or fat contained in the core portion further contains water.

9. The edible oil-encapsulating microcapsules according to any one of claims 1 to 8,
   wherein a thickness of the shell portion is 1 μm to 100 μm.

10. The edible oil-encapsulating microcapsules according to any one of claims 1 to 9,
    wherein the edible oil or fat in the core portion is one oil droplet, and a coefficient of variation of a number average liquid droplet diameter of the oil droplet is 20% or less.

11. Edible oil-encapsulating microcapsules comprising:

    a core portion containing edible oil or fat having a melting point of 30°C or less; and
    a shell portion encapsulating the core portion and containing an edible and ionically cross-linkable polymer that is cross-linked with a polyvalent cation,
    wherein a number average particle diameter is 10 μm or more and 300 μm or less, and
    in manufacturing of the edible oil-encapsulating microcapsules, the microcapsules are subjected to a step of heating at a temperature of 70°C or more for 1 minute or more after forming the microcapsules.

**12.** A microcapsule dispersion liquid,
wherein the edible oil-encapsulating microcapsules according to any one of claims 1 to 11 are dispersed in edible oil or fat or water.

**13.** A manufacturing method of the edible oil-encapsulating microcapsules according to any one of claims 1 to 11, the manufacturing method comprising:

a step A of obtaining an oil-in-water droplet dispersion liquid using a water phase containing an edible and ionically cross-linkable polymer and a chelate compound of a polyvalent cation, and an oil phase containing edible oil or fat having a melting point of 30°C or less;
a step B of mixing the oil-in-water droplet dispersion liquid obtained in the step A and edible oil or fat to obtain an oil-in-water-in-oil droplet dispersion liquid in which oil-in-water droplets are dispersed in the edible oil or fat; and
a step C of obtaining a mixed solution of the oil-in-water-in-oil droplet dispersion liquid obtained in the step B and edible oil or fat containing a pH lowering agent.

**14.** The manufacturing method of edible oil-encapsulating microcapsules according to claim 13,
wherein at least the step B and the step C are performed within a microchannel, and the oil-in-water-in-oil droplet dispersion liquid and the edible oil or fat containing a pH lowering agent are mixed within the microchannel.

**15.** The manufacturing method of edible oil-encapsulating microcapsules according to claim 13 or 14,
wherein a pH of a water phase in the mixed solution obtained in the step C is 6.9 or less.

**16.** The manufacturing method of edible oil-encapsulating microcapsules according to any one of claims 13 to 15, the manufacturing method further comprising:
a step of separating the edible oil-encapsulating microcapsules after the step C.

**17.** The manufacturing method of edible oil-encapsulating microcapsules according to claim 16, the manufacturing method further comprising:
a step of heating the edible oil-encapsulating microcapsules at a temperature of 70°C or more for 1 minute or more.

**18.** A meat substitute comprising the edible oil-encapsulating microcapsules according to any one of claims 1 to 11.

**19.** The meat substitute according to claim 18,
wherein a content of the edible oil-encapsulating microcapsules is 1% by mass to 30% by mass with respect to a total mass of the meat substitute.

FIG. 1

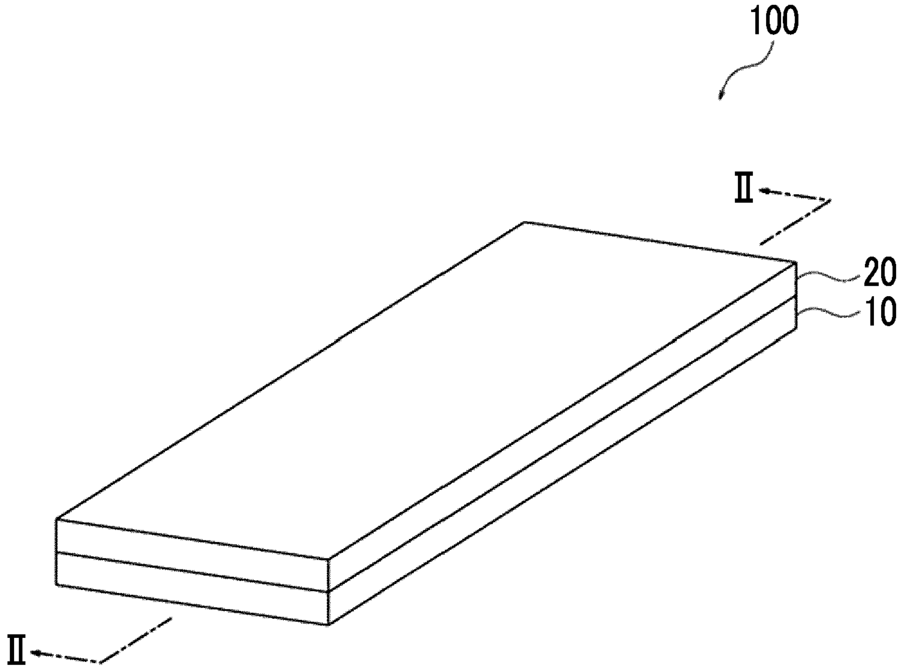


FIG. 2

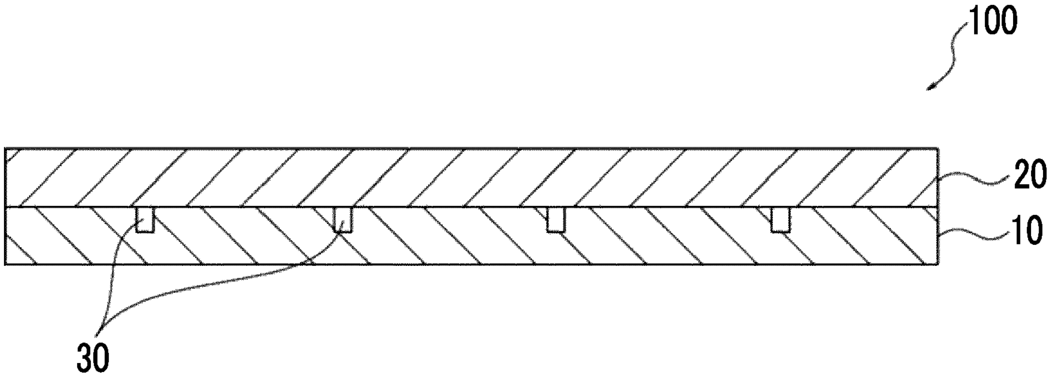

FIG. 3

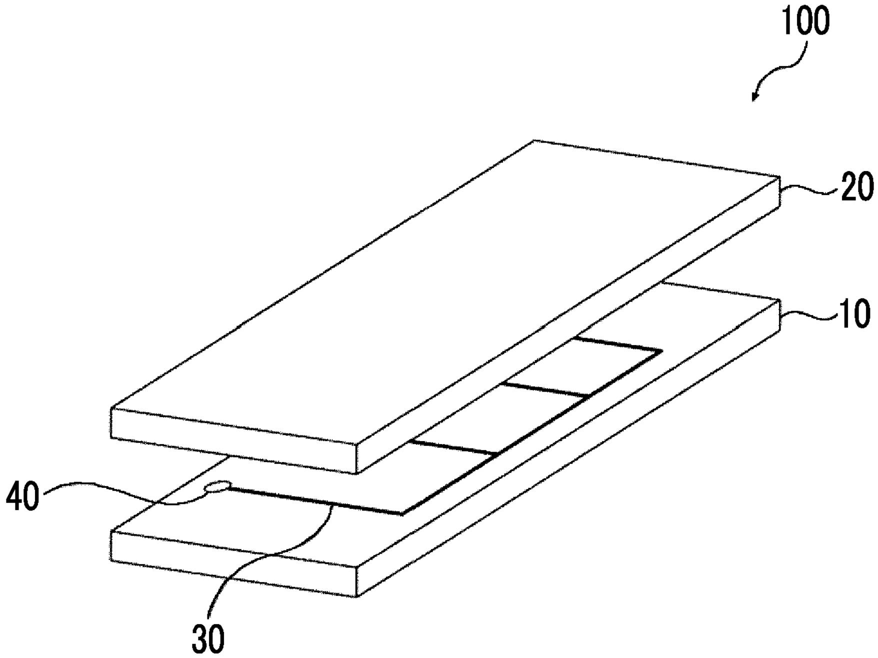


FIG. 4

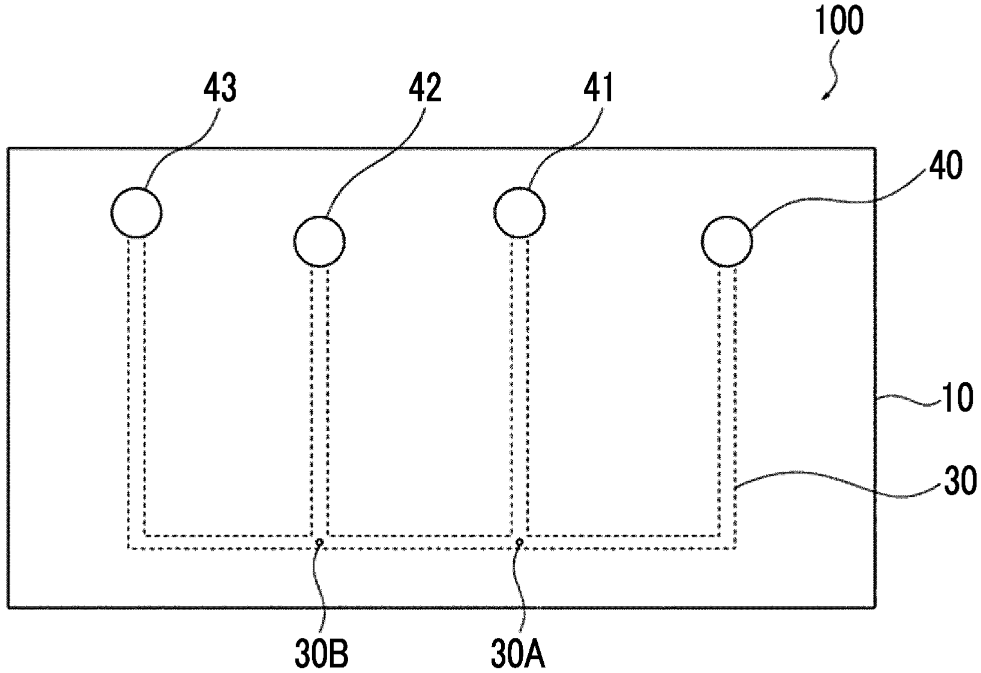

FIG. 5

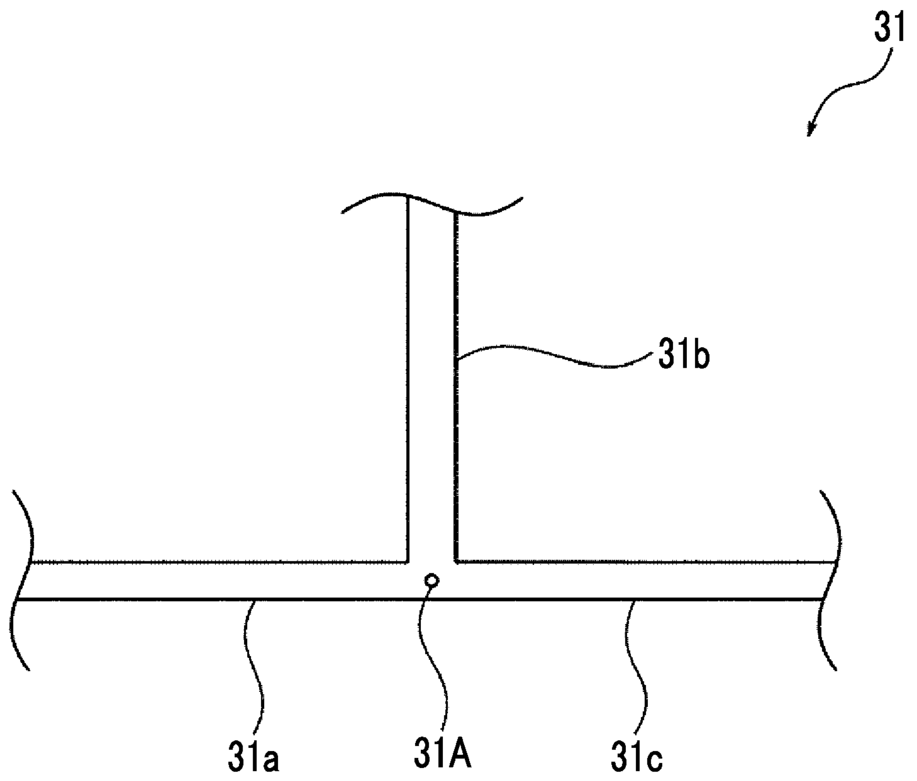


FIG. 6

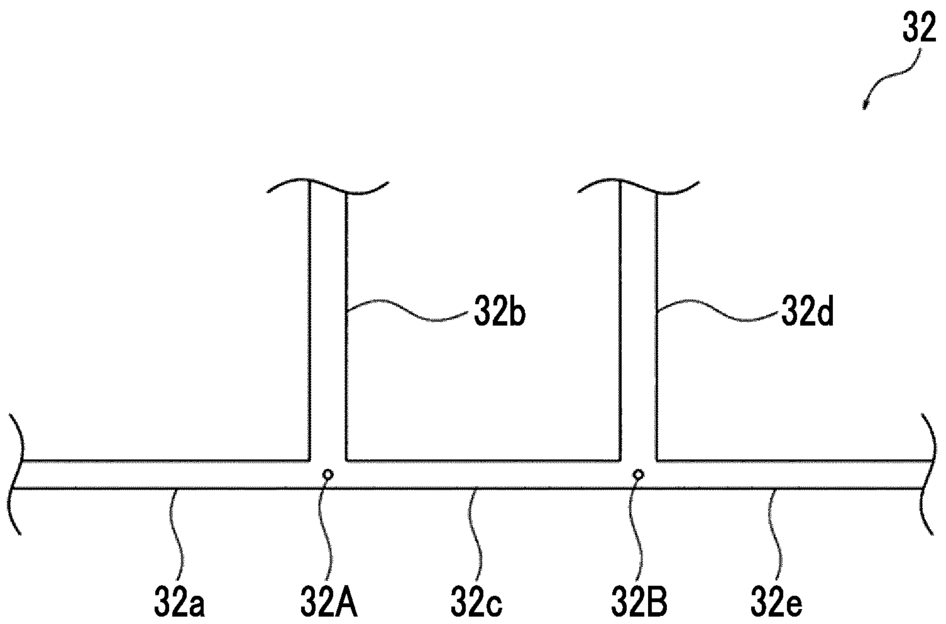

FIG. 7

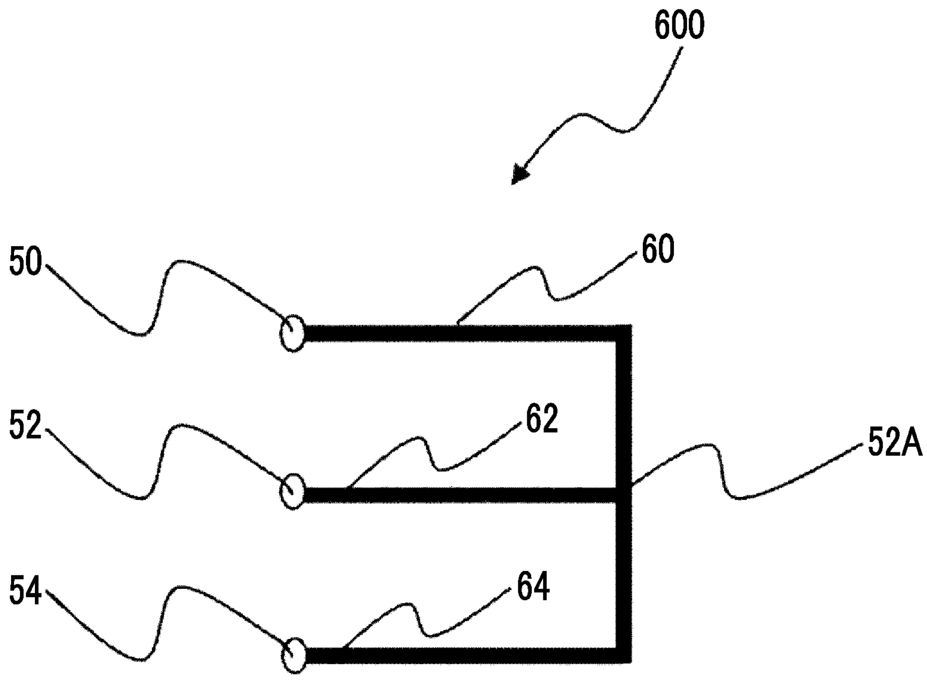


FIG. 8

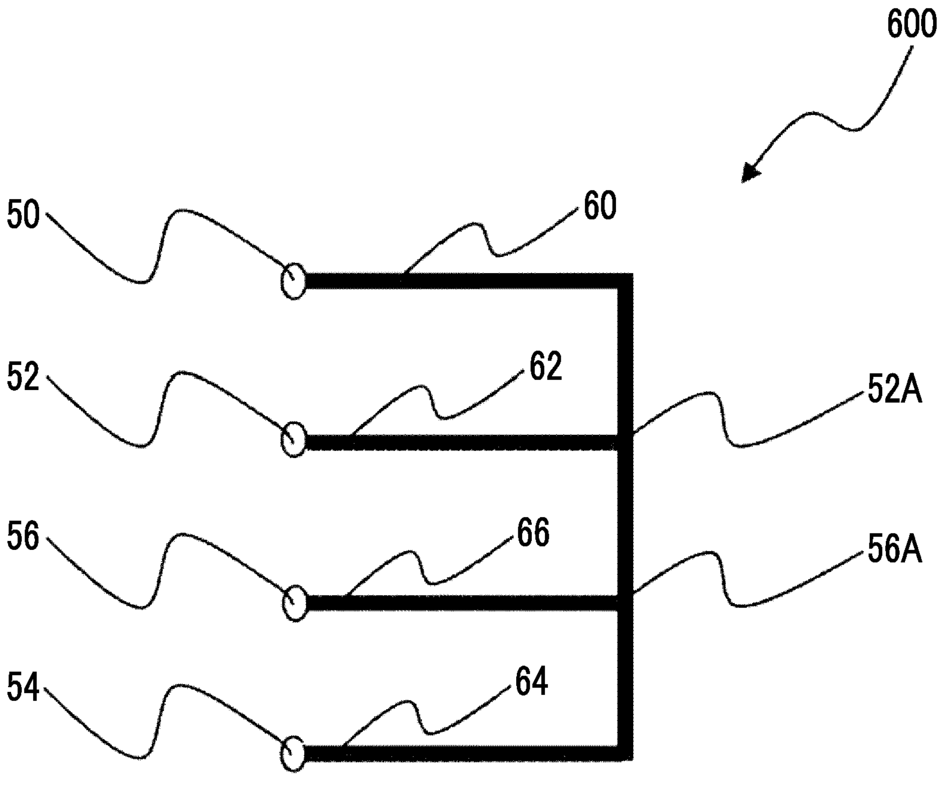

FIG. 9

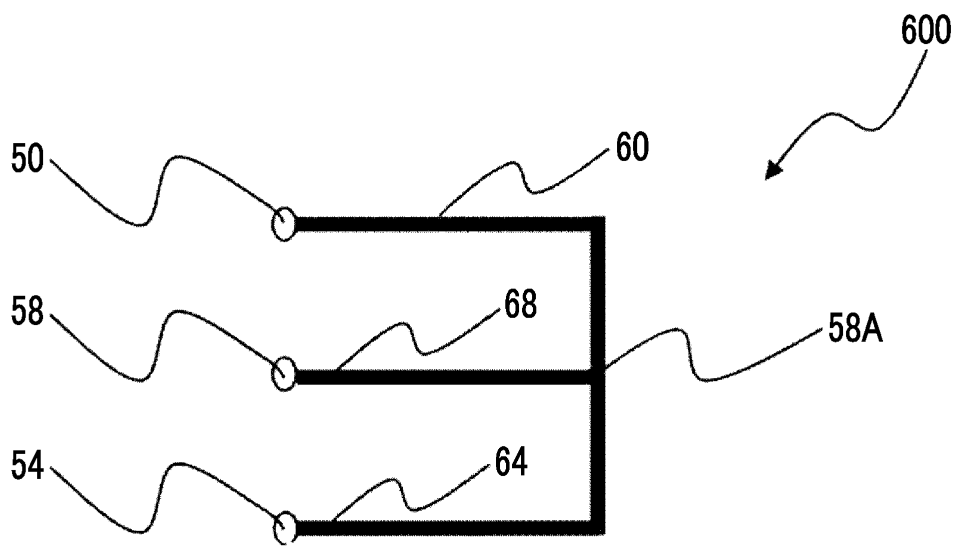


FIG. 10

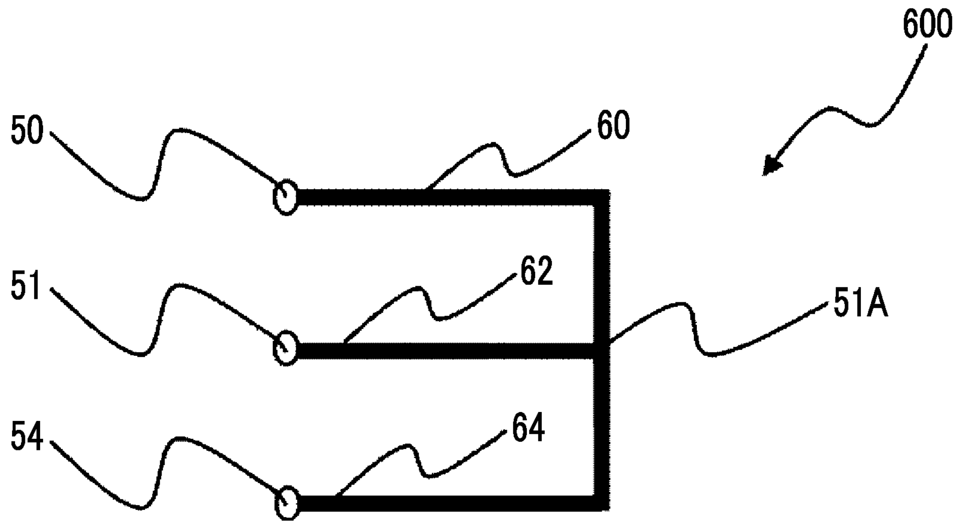

## INTERNATIONAL SEARCH REPORT

International application No.
**PCT/JP2021/043969**

**A. CLASSIFICATION OF SUBJECT MATTER**

***A23L 13/00***(2016.01)i; ***B01J 13/18***(2006.01)i; ***A23L 5/00***(2016.01)i
FI: A23L5/00 C; B01J13/18; A23L13/00 Z

According to International Patent Classification (IPC) or to both national classification and IPC

**B. FIELDS SEARCHED**

Minimum documentation searched (classification system followed by classification symbols)

A23L5/00; A23L13/00; B01J13/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-50946 A (AJINOMOTO CO., INC.) 23 February 2006 (2006-02-23) claims, paragraph [0024], examples | 1-19 |
| Y | JP 62-146584 A (YUKIJIRUSHI SHOKUHIN KK) 30 June 1987 (1987-06-30) claims, p. 1, lower right column, line 8 to p. 2, upper left column, line 5, p. 2, upper left column, line 12 to upper right column, line 6, examples | 1-19 |
| Y | JP 2013-255912 A (CHIBA UNIV) 26 December 2013 (2013-12-26) paragraphs [0009], [0046], [0088] | 1-19 |
| Y | JP 2016-155794 A (FUJI CAPSULE KK) 01 September 2016 (2016-09-01) paragraphs [0018]-[0021] | 2-4, 11, 13-19 |
| Y | JP 2005-170929 A (SHOWA SANGYO CO LTD) 30 June 2005 (2005-06-30) paragraph [0030] | 2-4, 11, 13-19 |
| Y | JP 2007-153851 A (MARUICHI KASEI KK) 21 June 2007 (2007-06-21) paragraph [0017] | 2-4, 11, 13-19 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 January 2022** | **08 February 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/043969**

**C. DOCUMENTS CONSIDERED TO BE RELEVANT**

| Category* | Citation of document, with indication, where appropriate, of the relevant passages | Relevant to claim No. |
|---|---|---|
| Y | JP 2014-513966 A (FMC (SHANGHAI) COMMERCIAL ENTERPRISE) 19 June 2014 (2014-06-19)<br>claims, paragraphs [0005], [0006] | 11, 13-19 |
| Y | JP 2002-282679 A (FUJI PHOTO FILM CO LTD) 02 October 2002 (2002-10-02)<br>paragraphs [0017], [0018] | 13-16, 18, 19 |

Form PCT/ISA/210 (second sheet) (January 2015)

INTERNATIONAL SEARCH REPORT

International application No.
PCT/JP2021/043969

**Box No. III Observations where unity of invention is lacking (Continuation of item 3 of first sheet)**

This International Searching Authority found multiple inventions in this international application, as follows:

(Invention 1) Invention in claim 1 and dependent claims referring to claim 1

The invention in claim 1 and dependent claims referring to claim 1 has the special technical feature of an "edible oil-encapsulated microcapsule comprising: a core part that contains edible oil and fat having a melting point of at most 30ºC; and a shell part that encapsulates the core part and contains an edible ionic crosslinkable polymer crosslinked with polyvalent cations, wherein the number-average particle diameter is 10-300 μm, and the variation coefficient of the number-average particle diameter is at most 30%", and is thus classified as invention 1.

(Invention 2) Invention in claim 2 and dependent claims referring to claim 2

The invention in claim 2 and dependent claims referring to claim 2 shares, with claim 1 classified as invention 1, the common technical feature of an "edible oil-encapsulated microcapsule comprising: a core part that contains edible oil and fat having a melting point of at most 30ºC; and a shell part that encapsulates the core part and contains an edible ionic crosslinkable polymer crosslinked with polyvalent cations, wherein the number-average particle diameter is 10-300 μm".

However, said technical feature does not make a contribution over the prior art in light of the disclosures of document 1 and document 2 and thus cannot be said to be a special technical feature. Moreover, there are no other same or corresponding special technical features between these inventions.

Further, claim 2 and the dependent claims referring to claim 2 are not dependent on claim 1. Furthermore, claim 2 and the dependent claims referring to claim 2 are not substantially identical to or similarly closely related to any of the claims classified as invention 1.

Therefore, the invention in claim 2 and the dependent claims referring to claim 2 cannot be classified as invention 1.

In addition, the invention in claim 2 and the dependent claims referring to claim 2 has the special technical feature of an "edible oil-encapsulated microcapsule in which a metal chelating agent is contained in at least one among the core part and the shell part", and is thus classified as invention 2.

(Invention 3) Invention in claim 11 and dependent claims referring to claim 11

The invention in claim 11 and dependent claims referring to claim 11 shares, with claim 1 classified as invention 1 and claim 2 classified as invention 2, the common technical feature of an "edible oil-encapsulated microcapsule comprising: a core part that contains edible oil and fat having a melting point of at most 30ºC; and a shell part that encapsulates the core part and contains an edible ionic crosslinkable polymer crosslinked with polyvalent cations, wherein the number-average particle diameter is 10-300 μm".

However, said technical feature does not make a contribution over the prior art in light of the disclosures of document 1 and document 2 and thus cannot be said to be a special technical feature. Moreover, there are no other same or corresponding special technical features between these inventions.

Further, the invention in claim 11 and the dependent claims referring to claim 11 is not dependent on claim 1 or claim 2. Furthermore, the invention in claim 11 and the dependent claims referring to claim 11 is not substantially identical to or similarly closely related to any of the claims classified as invention 1 or 2.

Therefore, the invention in claim 11 and the dependent claims referring to claim 11 cannot be classified as invention 1 or 2.

In addition, the invention in claim 11 and the dependent claims referring to claim 11 has the special technical feature of an "edible oil-encapsulated microcapsule which is subjected to a step for heating at a temperature of at least 70ºC for at least 1 minute after forming microcapsules in the production of the edible oil-encapsulated microcapsule", and is thus classified as invention 3.

Form PCT/ISA/210 (continuation of first sheet) (January 2015)

INTERNATIONAL SEARCH REPORT

International application No.
PCT/JP2021/043969

**Box No. III Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2021/043969**

| Patent document cited in search report | Publication date (day/month/year) | Patent family member(s) | Publication date (day/month/year) |
|---|---|---|---|
| JP 2006-50946 A | 23 February 2006 | (Family: none) | |
| JP 62-146584 A | 30 June 1987 | (Family: none) | |
| JP 2013-255912 A | 26 December 2013 | (Family: none) | |
| JP 2016-155794 A | 01 September 2016 | (Family: none) | |
| JP 2005-170929 A | 30 June 2005 | (Family: none) | |
| JP 2007-153851 A | 21 June 2007 | (Family: none) | |
| JP 2014-513966 A | 19 June 2014 | US 2014/0248400 A1<br>claims, paragraphs [0001], [0002]<br>EP 2707129 A<br>CN 102771688 A<br>KR 10-2014-0038454 A | |
| JP 2002-282679 A | 02 October 2002 | US 2002/0142915 A1<br>paragraphs [0029]-[0031] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014513966 A
- JP 62146584 A
- JP S62146584 A
- JP 2020199129 A